# EUROPÄISCHE PATENTSCHRIFT

(11) **EP 4 255 986 B1**
(45) Veröffentlichungstag und Bekanntmachung des Hinweises auf die Patenterteilung: **20.11.2024**
(21) Anmeldenummer: 21816080.2
(22) Anmeldetag: 29.11.2021
(51) Int. Cl.: C08L 83/04

(54) **SCHNELL HÄRTENDE ZWEIKOMPONENTIGE SILICONZUSAMMENSETZUNG MIT LANGER MISCHEROFFENZEIT**
RAPID CURING TWO-COMPONENT SILICONE COMPOSITION WITH LONG-TERM MIXER OPEN TIME
COMPOSITION DE SILICONE À DEUX COMPOSANTS À DURCISSEMENT RAPIDE À LONG TEMPS D'OUVERTURE DU MÉLANGEUR

(30) Priorität: 02.12.2020 EP 20211309
(43) Veröffentlichungstag der Anmeldung: 11.10.2023
(73) Patentinhaber: Sika Technology AG, 6340 Baar (CH)
(72) Erfinder: SUTER, Riccardo, 5400 Baden (CH)
(74) Vertreter: Sika Patent Attorneys
(86) Internationale Anmeldenummer: PCT/EP2021/083406
(87) Internationale Veröffentlichungsnummer: WO 2022/117513

(56) Entgegenhaltungen:
- EP-A1- 1 995 281
- US-A- 5 346 940

## Beschreibung

### Technisches Gebiet

Die vorliegende Erfindung betrifft das Gebiet der zweikomponentigen Siliconzusammensetzungen.

### Stand der Technik

Zweikomponentige Siliconzusammensetzungen sind schon seit längerem bekannt und werden insbesondere als Kleb- und Dichtstoffe in unterschiedlichen Anwendungen eingesetzt. Weit verbreitet sind insbesondere bei Raumtemperatur vernetzende, zweikomponentige Siliconzusammensetzungen, auch bekannt als RTV-2 Silicone (RTV-2: "room temperature vulcanizing, 2-part silicones").

Eine derartige zweikomponentige Siliconzusammensetzung ist beispielsweise beschrieben in EP 0 787 766 A1. Um die Lagerstabilität der dort beschriebenen Zusammensetzung nicht zu beeinträchtigen bzw. um eine zu frühe, ungewollte Aushärtung zu verhindern, werden die Hauptbestandteile, nämlich ein α,ω-Dihydroxypolydiorganosiloxan und ein Katalysator sowie Vernetzer für die Vernetzung von Polydiorganosiloxanen, in zwei separaten Komponenten aufbewahrt. Bei der Applikation einer derartigen Zusammensetzung werden dann die beiden Komponenten in einem vorgesehenen Gewichts- oder Volumenverhältnis miteinander vermischt, worauf es zur Vernetzung bzw. zur Aushärtung der Zusammensetzung kommt. Die Zeit, während der die Mischung noch verarbeitbar und applizierbar ist bevor die Aushärtung zu weit fortgeschritten ist, wird als Topfzeit oder Offenzeit bezeichnet.

Ein bedeutender Nachteil derartiger zweikomponentiger Siliconzusammensetzungen, wie sie in EP 0 787 766 A1 beschrieben sind, ist die gegenseitige Abhängigkeit der Topfzeit und der Aushärtegeschwindigkeit. Diese Eigenschaften werden durch die Formulierung der zweikomponentigen SIliconzusammensetzung bestimmt, vor allem jedoch über die Art und Menge an enthaltenen Reaktivsubstanzen wie Vernetzer und über die Menge des Katalysators. Dabei können üblicherweise zweikomponentige SIliconzusammensetzungen mit kurzer Topfzeit und schneller Aushärtung, oder aber langer Topfzeit und langsamer Aushärtung erreicht werden. Alle diese Zusammensetzungen weisen zudem ein typisches Aushärteverhalten auf, das mit einer langsamen oder schnellen, aber von Anfang an stetigen Vernetzung und damit Viskositätszunahme nach Mischen der Komponenten einhergeht. Dies ist vor allem in der industriellen Fertigung ein Problem. Dort wäre eine auf den Prozess zugeschnittene Topfzeit ohne Wartephasen gewünscht, wobei die Zusammensetzung aber dann nach Applikation eine sehr rasche Aushärtung aufweist, damit die gefertigten Teile rasch weiterbewegt werden können. Bei sehr kurzen Topfzeiten ergibt sich auch das Problem, dass die Mischung zu früh auszuhärten beginnt und damit Ausschüsse und unerwünschte Reinigungsarbeiten erzeugt. Bei zu langen Topfzeiten und anschliessend langsamer Aushärtung werden die Taktzeiten der Fertigung durch Wartezeiten erhöht, was ebenfalls unerwünscht ist. Eine ideale zweikomponentige Siliconzusammensetzung hätte also eine lange Topfzeit, aber danach eine sehr rasche Aushärtung. Dies ist aber nur schwierig zu erreichen.

Ein weiterer bedeutender Nachteil schnell aushärtender zweikomponentiger Siliconzusammensetzungen ist die so genannte Mischeroffenzeitproblematik. Diese ergibt sich vor allem, wenn die beiden Komponenten über einen Statikmischer oder dergleichen miteinander vermischt werden. Dabei kann es nämlich beim Aufeinandertreffen der beiden Komponenten beim Eintritt in den Statikmischer zu einer kurzzeitigen, lokalen Überkonzentration der Katalysator enthaltenden Komponente gegenüber der Polydiorganosiloxan enthaltenden Komponente kommen, was zur schnellen Aushärtung der Zusammensetzung im Inneren der Statikmischers führen und diesen verstopfen kann oder die Topfzeit während und nach der Applikation erheblich verkürzen kann. Dies kommt insbesondere dann vor, wenn die Polydiorganosiloxan enthaltende Komponente gegenüber der Katalysator-enthaltenden Komponente in einem Gewichtsverhältnis von ≥ 1:1 eingesetzt wird, was in der Praxis oft der Fall ist. Möglichkeiten zur Behebung dieses Nachteils sind beispielsweise die Verringerung der Katalysatorkonzentration in der Katalysator-enthaltenden Komponente, entweder durch tatsächliche Verringerung des Katalysatorgehalts oder aber durch höhere Verdünnung des Katalysators. Die Verringerung des Katalysatorgehalts führt jedoch zwangsweise zu einer Erhöhung der Aushärtungsdauer, also auch der Topfzeit, was meistens unerwünscht ist. Hingegen bringt es die höhere Verdünnung des Katalysators mit sich, dass zusätzliche Verdünnungsmittel eingesetzt werden müssen oder nicht reaktive Bestandteile aus der Polydiorganosiloxan-enthaltenden Komponente in die Katalysator-enthaltenden Komponente verschoben werden müssen, was Beeinträchtigungen in der Verarbeitbarkeit und/oder in der Mechanik der ausgehärteten Zusammensetzung mit sich bringen kann und zudem die Möglichkeiten der Ausgestaltung der Zusammensetzung einschränkt.

Es besteht daher das Bedürfnis nach einer zweikomponentigen Siliconzusammensetzung, die eine lange Topfzeit und gleichzeitig eine lange Mischeroffenzeit aufweist, also wenig anfällig für oben beschriebene ungünstige Mischphänomene ist, aber nach Ende der Topfzeit sehr rasch aushärtet, damit die Fertigungsteile mit der applizierten Zusammensetzung so rasch wie möglich weiterbewegt werden können.

US5346940 A offenbart eine 2K-Zusammensetzung mit einer ersten Komponente enthaltend Hydroxylgruppen terminierten Polydiorganosiloxan, Füllstoff und Wasser und einer zweiten Komponente enthaltend ein nicht kondensierbares Polydiorganosiloxan, Vernetzer und Zinn-Katalysator.

### Darstellung der Erfindung

Aufgabe der vorliegenden Erfindung ist es daher, eine zweikomponentige Siliconzusammensetzung bereitzustellen, welche die Nachteile des Stands der Technik überwindet und über eine lange Mischeroffenzeit unabhängig vom Mischverhältnis und eine lange Topfzeit verfügt und nach Ende der Topfzeit sehr rasch aushärtet. Weiterhin soll die Zusammensetzung mit niedrigen Vernetzerkonzentrationen formulierbar sein und damit niedrige VOC-Belastungen durch Spaltalkohole aufweisen, aussergewöhnlich lagerstabil sein und nach Aushärtung gute mechanische Eigenschaften aufweisen. Überraschenderweise wurde gefunden, dass zweikomponentige Siliconzusammensetzungen gemäss Anspruch 1 diese Aufgabe lösen.

Durch den für den Fachmann in keiner Weise naheliegenden Einsatz eines spezifischen Katalysators mit zwei Thiolat Liganden, bevorzugt in Kombination mit spezifischen Organosilanen als Vernetzer, können zweikomponentige Siliconzusammensetzungen zur Verfügung gestellt werden, welche eine lange Topfzeit und vor allem eine lange Mischeroffenzeit aufweisen und welche in breit definierbaren Mischverhältnissen der beiden Komponenten eingesetzt werden können. Die erfindungsgemässen zweikomponentigen Siliconzusammensetzungen weisen ein robustes Mischprofil auf, können also mit breit auswählbaren Mischverhältnissen von Polymerkomponente zu Härterkomponente eingesetzt werden. Weiterhin weisen die erfindungsgemässen zweikomponentigen Siliconzusammensetzungen eine aussergewöhnlich gute Lagerstabilität auf, insbesondere bezüglich der Härterkomponente, welche den Katalysator enthält. Diese zeigt eine aussergewöhnlich niedrige Tendenz zur Phasenseparation und kann daher auch nach langer Lagerzeit ohne Einschränkungen verwendet werden. Die erfindungsgemässen zweikomponentigen Siliconzusammensetzungen können so eingestellt werden, dass Topfzeiten von beispielsweise 25 min und gleichzeitg Mischeroffenzeiten von beispielsweise 7-8 Minuten erreicht werden können. Gleichzeitig härten die erfindungsgemässen zweikomponentigen Siliconzusammensetzungen so rasch aus, dass in bevorzugten Ausführungsformen die Mischungen zu 80% ausgehärtet sind 4h nach Ende der Applikation mit einer Topfzeit von bis zu 30 Minuten. Ausserdem weisen die erfindungsgemässen zweikomponentigen Siliconzusammensetzungen ein sehr gutes Adhäsionsvermögen auf verschiedenen Substraten auf.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine zweikomponentige Siliconzusammensetzung, bestehend aus einer Komponente **A** umfassend
i) mindestens ein Hydroxylgruppen-terminiertes Polydiorganosiloxan **P**;
ii) bevorzugt mindestens einen Füllstoff;
iii) zwischen 0.05 und 5.0 Gew.-% emulgiertes Wasser, bezogen auf Komponente **A**;

und einer Komponente **B** umfassend
   i) mindestens ein nicht kondensierbares Polyidiorganosiloxan **W** als Weichmacher;
   ii) mindestens ein Organosilan **V** als Vernetzer;
   iii) mindestens einen Katalysator **K** für die Vernetzung von Polydiorganosiloxanen;
dadurch gekennzeichnet, dass
alle Organosilane **V** vorzugsweise dieselben hydrolysierbaren Alkoxysilangruppen aufweisen, bevorzugt Methoxysilangruppen; und
Katalysator **K** ein Zinnkomplex mit zwei Mercaptidliganden nach Formel (V) ist, 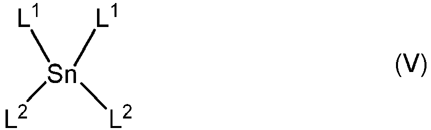
wobei Liganden L¹ unabhängig voneinander für über Schwefel koordinierte Alkylmercaptipde stehen, insbesondere C₆ bis C₁₆ Alkylmercaptide, wobei Liganden L¹ optional Methyldialkoxysilagruppen, bevorzugt Methyldimethoxysilangruppen aufweisen, und Liganden L² unabhängig voneinander für Alkylliganden stehen, insbesondere für C₆ bis C₁₄ Alkylliganden; und
Komponente **B** weniger als 5 Gew.-% Russ, bezogen auf Komponente **B,** enthält.

Im vorliegenden Dokument bezeichnet der Begriff "Silangruppe" eine an einen organischen Rest oder an einen Polyorganosiloxan-Rest gebundene Silylgruppe mit einer bis drei, insbesondere zwei oder drei, hydrolysierbaren Substituenten am Silicium-Atom. Besonders gebräuchliche hydrolysierbare Substituenten sind Alkoxy-Reste. Diese Silangruppen werden auch als "Alkoxysilangruppen" bezeichnet. Silangruppen können auch in partiell oder vollständig hydrolysierter Form vorhanden sein.

Als "Aminosilan" bzw. "Glycidoxysilan" werden Organoalkoxysilane bezeichnet, die am organischen Rest zusätzlich zur Silangruppe eine oder mehrere Amino- bzw. Glycidoxygruppen aufweisen.

Als "primäre Aminogruppe" bzw. "primärer Amin-Stickstoff" wird eine NH₂-Gruppe bzw. deren Stickstoffatom bezeichnet, die bzw. das an einen organischen Rest gebunden ist, und als "sekundäre Aminogruppe" bzw. "sekundärer Amin-Stickstoff" wird eine NH-Gruppe bzw. deren Stickstoffatom bezeichnet, die bzw. das an zwei organische Reste, welche auch gemeinsam Teil eines Rings sein können, gebunden ist, und als "tertiäre Aminogruppe" bzw. "tertiärer Amin-Stickstoff" wird eine N-Gruppe bzw. deren Stickstoffatom bezeichnet, die bzw. das an drei organische Reste, welche auch zu zweit oder zu dritt Teil eines oder mehrerer Ringe sein können, gebunden ist.

Der Begriff "organisches Polymer" umfasst ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde und im PolymerRückgrat mehrheitlich Kohlenstoffatome aufweist, sowie Umsetzungsprodukte eines solchen Kollektivs von Makromolekülen. Polymere mit einem Polyorganosiloxan-Rückgrat (gemeinhin als "Silicone" bezeichnet) stellen keine organischen Polymere im Sinne des vorliegenden Dokuments dar.

Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 6 Monaten bis zu 9 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Mit "Poly" beginnende Substanznamen wie beispielsweise Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter dem Begriff "Topfzeit" oder synonym "Offenzeit" wird die Verarbeitbarkeitsdauer von reaktiven Zusammensetzungen nach deren Applikation verstanden. Das Ende der Topfzeit ist in den meisten Fällen mit einem derartigen Viskositätsanstieg der Zusammensetzung verbunden, dass keine zweckmässige Verarbeitung der Zusammensetzung mehr möglich ist. Unter dem Begriff "Mischeroffenzeit" wird die Offenzeit, also die Verarbeitbarkeitsdauer, einer reaktiven Zusammensetzung innerhalb eines statischen Mischers verstanden. Während dieser Zeit kann das Material im Mischer verbleiben, ohne dass es sich in seinen Verarbeitungseigenschaften wesentlich verändert und ohne dass zur Fortsetzung des Arbeitsvorgangs Spülen oder Produkt-Extrusion erforderlich werden.

Eine gestrichelte Linie in den Formeln in diesem Dokument stellt jeweils die Bindung zwischen einem Substituenten und dem zugehörigen Molekülrest dar. Als "Raumtemperatur" wird eine Temperatur von ca. 23°C bezeichnet.

Alle im Dokument erwähnten Industrienormen oder Standards beziehen sich, sofern nichts anderes angegeben, auf die zum Zeitpunkt der Einreichung der Patentanmeldung gültige Fassung der Industrienorm oder des Standards.

Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

### Komponente A

Die erste Komponente **A** der zweikomponentigen Siliconzusammensetzung enthält mindestens ein Hydroxylgruppen terminiertes Polydiorganosiloxan **P** und zwischen 0.05 und 5.0 Gew.-% emulgiertes Wasser, bezogen auf Komponente **A,** sowie bevorzugt mindestens einen Füllstoff.

### Polydiorganosiloxan P

Die Komponente **A** der zweikomponentigen Siliconzusammensetzung umfasst das Hydroxylgruppen terminierte Polydiorganosiloxan **P,** welches insbesondere ein Polydiorganosiloxan **P'** der Formel (IV) ist.

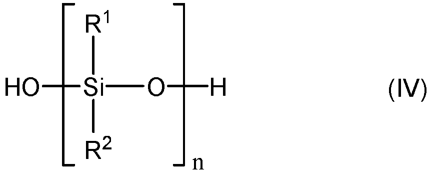

Dabei stehen die Reste R¹ und R² unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.

Insbesondere stehen die Reste R¹ und R² für Alkylreste mit 1 bis 5, insbesondere mit 1 bis 3, C-Atomen, bevorzugt für Methylgruppen.

Der Index n ist so gewählt, dass das Gewichtsmittel des Molekulargewichts M_{w} des Polydiorganosiloxans **P** relativ zu Polystyrol 500 bis 250'000 g/mol beträgt. Insbesondere ist das Hydroxylgruppen terminierte Polydiorganosiloxan **P'** ein Polydiorganosiloxan **P1** der Formel (I), wobei n so gewählt ist, dass das Gewichtsmittel des Molekulargewichts M_{w} des Polydiorganosiloxans **P1** relativ zu Polystyrol 30'000 bis 80'000 g/mol, insbesondere 35'000 bis 60'000 g/mol, beträgt; oder dass als Polydiorganosiloxan **P'** eine Mischung eingesetzt wird von
i') mindestens einem Hydroxylgruppen terminierten Polydiorganosiloxan **P2** der Formel (I), wobei n so gewählt ist, dass das Gewichtsmittel des Molekulargewichts M_{w} des Polydiorganosiloxans **P2** relativ zu Polystyrol > 80'000 bis 250'000 g/mol, insbesondere 90'000 bis 150'000 g/mol, beträgt; sowie
ii') mindestens einem Hydroxylgruppen terminierten Polydiorganosiloxan **P3** der Formel (I), wobei n so gewählt ist, dass das Gewichtsmittel des Molekulargewichts M_{w} des Polydiorganosiloxans **P3** relativ zu Polystyrol 500 bis ≤ 30'000 g/mol, insbesondere 500 bis 25'000 g/mol, bevorzugt 1'000 bis 20'000 g/mol beträgt;
oder dass als Polydiorganosiloxan **P'** eine Mischung eingesetzt wird von
i") mindestens einem Hydroxylgruppen terminierten Polydiorganosiloxan **P1** der Formel (I), wobei n so gewählt ist, dass das Gewichtsmittel des Molekulargewichts M_{w} des Polydiorganosiloxans **P1** relativ zu Polystyrol 30'000 bis 80'000 g/mol, insbesondere 35'000 bis 60'000 g/mol, beträgt; sow i e
ii") mindestens einem Hydroxylgruppen terminierten Polydiorganosiloxan **P3** der Formel (I), wobei n so gewählt ist, dass das Gewichtsmittel des Molekulargewichts M_{w} des Polydiorganosiloxans **P3** relativ zu Polystyrol 500 bis ≤ 30'000 g/mol, insbesondere 500 bis 25'000 g/mol, bevorzugt 1'000 bis 20'000 g/mol beträgt.

Hydroxylgruppen terminierte Polydiorganosiloxane, wie sie insbesondere in Formel (I) dargestellt sind, sind bekannt und kommerziell erhältlich. Auch die Herstellung derartiger Polydiorganosiloxane erfolgt in bekannter Art und Weise. Beispielsweise ist sie beschrieben in US4962152.

Die vorhergehend beschriebenen Hydroxylgruppen terminierten Polydiorganosiloxane **P** weisen bei 23°C vorzugsweise eine Viskosität zwischen 1 und 500'000 mPa s, insbesondere zwischen 10 und 250'000 mPa s, auf. Weiterhin bevorzugt weist das Polydiorganosiloxan **P1** bei 23°C eine Viskosität zwischen 5'000 und 100'000 mPa·s, insbesondere zwischen 7'500 und 50'000 mPa·s, auf.

Handelt es sich beim Polydiorganosiloxan **P'** um eine Mischung ist von mindestens einem Hydroxylgruppen terminierten Polydiorganosiloxan **P2** und mindestens einem Hydroxylgruppen terminierten Polydiorganosiloxan **P3,** so weist das Polydiorganosiloxan **P2** bei 23°C vorzugsweise eine Viskosität zwischen 100'000 und 500'000 mPa s, insbesondere zwischen 150'000 und 250'000 mPa s, auf und das Polydiorganosiloxan **P3** weist bei 23°C vorzugsweise eine Viskosität zwischen 1 und 5'000 mPa·s, insbesondere zwischen 10 und 2'500 mPa·s, bevorzugt zwischen 20 und 1'000 mPas auf. Die angegebenen Viskositäten werden gemessen nach DIN 53018.

Es kann vorteilhaft sein, mehrere verschiedene Polydiorganosiloxane **P2** und/oder **P3** als Mischung zu verwenden.

Handelt es sich beim Polydiorganosiloxan **P'** um eine Mischung ist von mindestens einem Hydroxylgruppen terminierten Polydiorganosiloxan **P1** und mindestens einem Hydroxylgruppen terminierten Polydiorganosiloxan **P3,** so weist das Polydiorganosiloxan **P1** bei 23°C vorzugsweise eine Viskosität zwischen 100'000 und 500'000 mPa s, insbesondere zwischen 7'500 und 50'000 mPa s, auf und das Polydiorganosiloxan **P3** weist bei 23°C vorzugsweise eine Viskosität zwischen 1 und 5'000 mPa·s, insbesondere zwischen 10 und 2'500 mPa·s, bevorzugt zwischen 20 und 1'000 mPas auf. Die angegebenen Viskositäten werden gemessen nach DIN 53018.

Es kann vorteilhaft sein, mehrere verschiedene Polydiorganosiloxane **P1** und/oder **P3** als Mischung zu verwenden.

Wird als Polydiorganosiloxan **P'** eine Mischung von mindestens einem Polydiorganosiloxan **P2** und mindestens einem Polydiorganosiloxan **P3** eingesetzt, liegt der Gewichtsanteil an Polydiorganosiloxan **P2** in der Regel über dem Gewichtsanteil an Polydiorganosiloxan **P3**. Es ist jedoch zu berücksichtigen, dass die jeweiligen Anteile abhängig sind vom Molekulargewicht der jeweiligen Polydiorganosiloxane.

Wird als Polydiorganosiloxan **P'** eine Mischung von mindestens einem Polydiorganosiloxan **P1** und mindestens einem Polydiorganosiloxan **P3** eingesetzt, liegt der Gewichtsanteil an Polydiorganosiloxan **P1** in der Regel über dem Gewichtsanteil an Polydiorganosiloxan **P3**. Es ist jedoch zu berücksichtigen, dass die jeweiligen Anteile abhängig sind vom Molekulargewicht der jeweiligen Polydiorganosiloxane.

Die Komponente **A** enthält das das Hydroxylgruppen terminierte Polydiorganosiloxan **P** oder das Hydroxylgruppen terminierte Polydiorganosiloxan **P'** bevorzugt in einer Menge von zwischen 30 Gew.-% und 70 Gew.-%, bevorzugt zwischen 30 Gew.-% und 50 Gew.-%, bezogen auf die Komponente **A.**

Handelt es sich beim Polydiorganosiloxan **P'** um eine Mischung ist von mindestens einem Hydroxylgruppen terminierten Polydiorganosiloxan **P2** und mindestens einem Hydroxylgruppen terminierten Polydiorganosiloxan **P3,** so enthält Komponente **A** bevorzugt zwischen 20 Gew.-% und 60 Gew.-%, bevorzugt zwischen 30 Gew.-% und 50 Gew.-%, bezogen auf die Komponente **A,** an Hydroxylgruppen terminierten Polydiorganosiloxan **P2,** sowie zwischen 1 Gew.-% und 15 Gew.-%, bevorzugt zwischen 2 Gew.-% und 10 Gew.-%, bezogen auf die Komponente **A,** an Hydroxylgruppen terminierten Polydiorganosiloxan **P3**.

Handelt es sich beim Polydiorganosiloxan **P'** um eine Mischung ist von mindestens einem Hydroxylgruppen terminierten Polydiorganosiloxan **P1** und mindestens einem Hydroxylgruppen terminierten Polydiorganosiloxan **P3,** so enthält Komponente **A** bevorzugt zwischen 20 Gew.-% und 60 Gew.-%, bevorzugt zwischen 30 Gew.-% und 50 Gew.-%, bezogen auf die Komponente **A,** an Hydroxylgruppen terminierten Polydiorganosiloxan **P1**, sowie zwischen 0.5 Gew.-% und 15 Gew.-%, bevorzugt zwischen 0.75 Gew.-% und 10 Gew.-%, bezogen auf die Komponente **A,** an Hydroxylgruppen terminierten Polydiorganosiloxan **P3**.

Die beschriebenen Polydiorganosiloxane **P** können in jeder Ausführungsform auch Anteile an Verzweigungen aufweisen (sogenannte T-Einheiten), welche Si-OH Gruppen an Seitenketten tragen. Es ist allerdings bevorzugt, dass die Polyidorganosiloxane vorwiegend linear und ohne SI-OH-reaktive Seitenketten ausgebildet sind. Für die beschriebenen Polydiorganosiloxane **P2** insbesondere kann es jedoch hinsichtlich der mechanischen Eigenschaften der ausgehärteten Zusammensetzung vorteilhaft sein, wenn ein geringer Anteil der Polydorganosiloxaneinheiten des Polydiorganosiloxans **P2** aus T-Einheiten besteht, bevorzugt 0-10%, inbesondere 0.01 bis 5%, meist bevorzugt 0.02 bis 1% der Siloxaneinheiten des Polydiorganosiloxans **P2**. Die restlichen Siloxaneinheiten sind in allen Fällen D-Einheiten, also streng lineare Siloxaneinheiten ohne Si-OH-Gruppen.

### Wasser

Die Komponente **A** der zweikomponentigen Siliconzusammensetzung umfasst weiterhin zwischen 0.05 Gew.-% und 5.0 Gew.-% emulgiertes Wasser, bezogen auf Komponente **A.** Wasser in der Komponente **A** führt zu einer raschen, gleichmässigen Aushärtung der gemischten zweikomponentigen Zusammensetzung und ist wesentlich, um eine erfindungsgemäss rasche und gleichmäsige Aushärtung ermöglichen. Bevorzugt ist Wasser mit einer Menge von zwischen 0.1 Gew.-% und 2.5 Gew.-%, insbesondere zwischen 0.1 Gew.-% und 1.5 Gew.-%, bezogen auf Komponente **A,** enthalten.

Das Wasser ist dabei nicht in freier Form oder als adsorbiertes Wasser (etwa auf Füllstoffen) enthalten, sondern als Emulsion (beispielsweise in Siliconöl) eingemischt. Dies ermöglicht eine homogenere Einmischung mit geringen Konzentrationsgradienten und nach Applikation gleichmässigerer Aushärtung der gemischten Zusammensetzung. Als vorteilhaft haben sich beispielsweise Wasser/Öl Emulsionen mit 40 bis 60 Gew.-% Wasser erwiesen.

Die Komponente **A** der zweikomponentigen Siliconzusammensetzung kann weiterhin zusätzliche Additive, wie beispielsweise Füllstoffe, Weichmacher, Pigmente, sowie Formulierungsadditive wie Dispersionsadditive oder Thixotropiermittel enthalten. Solche Zusatzstoffe sind dem Fachmann der Siliconformulierung bekannt. Diese Zusatzstoffe können die Verarbeitbarkeit und Mischbarkeit der Komponente **A** und/oder der gemischten zweikomponentigen Siliconzusammensetzung verbessern. Sie sind aber nicht wesentlich für die Wirkung der Erfindung.

### Komponente B

Die zweite Komponente **B** der zweikomponentigen Siliconzusammensetzung enthält:
i) mindestens ein nicht kondensierbares Polyidiorganosiloxan als Weichmacher **W**;
ii) mindestens ein Organosilan **V** als Vernetzer;
iii) mindestens einen Katalysator **K** für die Vernetzung von Polydiorganosiloxanen;
dadurch gekennzeichnet, dass
alle Organosilane **V** vorzugsweise dieselben hydrolysierbaren Alkoxysilangruppen aufweisen, bevorzugt Methoxysilangruppen; und Katalysator **K** ein Zinnkomplex mit zwei Mercaptidliganden nach Formel (V) ist, 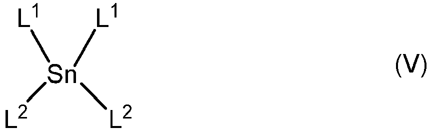
wobei Liganden L¹ unabhängig voneinander für über Schwefel koordinierte Alkylmercaptipde stehen, insbesondere C₆ bis C₁₆ Alkylmercaptide, wobei Liganden L¹ optional Methyldialkoxysilagruppen, bevorzugt Methyldimethoxysilangruppen aufweisen, und Liganden L² unabhängig voneinander für Alkylliganden stehen, insbesondere für C₆ bis C₁₄ Alkylliganden; und
Komponente **B** weniger als 5 Gew.-% Russ, bezogen auf Komponente **B,** enthält.

### Weichmacher W

Komponente **B,** und bevorzugt auch Komponente **A,** enthalten mindestens ein nicht kondensierbares Polyidiorganosiloxan als Weichmacher **W.** Dabei handelt es sich üblicherweise um ein Polydiorganosiloxan, dessen Endgruppen mit Alkyl- oder Vinylgruppen verschlossen sind und das Polydiorganosiloxan demzufolge keine Kondensations- oder Vernetzungsreaktionen eingehen kann.

Als Weichmacher **W** sind besonders trialkylsilylterminierte Polydialkylsiloxane geeignet, insbesondere trimethylsilylterminierte Polydimethylsiloxane, wie weiter oben bereits beschreiben. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher **W** eingesetzt werden, können auch solche Verbindungen verwendet werden, die verzweigt sind. Derartige verzweigte Verbindungen entstehen dadurch, dass in den zu ihrer Herstellung dienenden Ausgangsstoffen kleine Mengen tri- oder tetrafunktioneller Silane verwendet werden. Es ist auch möglich anstatt der Polysiloxan-Weichmacher, andere organische Verbindungen, wie zum Beispiel bestimmte Kohlenwasserstoffe, Hydroxyl-freie Polyether oder deren Gemische, als Weichmacher **W** einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Siliconzusammensetzung aufweisen.

Bevorzugt werden als Weichmacher **W** Polydimethylsiloxane mit Viskositäten zwischen 1 und 200'000 mPa·s. Besonders bevorzugt sind Viskositäten zwischen 10 und 150'000 mPa·s.

Dabei ist es besonders vorteilhaft und bevorzugt, wenn in der Komponente **A** als Weichmacher **W** trialkylsilylterminierte Polydimethylsiloxane mit Viskositäten zwischen 1 und 10'000 mPa s, bevorzugt zwischen 10 und 1'000 mPa·s eingesetzt werden. Damit können besonders vorteilhafte Viskositäten für die Komponente **A** eingestellt werden, was die Mischung erleichtert.

Es ist weiterhin besonders vorteilhaft und bevorzugt, wenn in der Komponente **B** als Weichmacher **W** trialkylsilylterminierte Polydimethylsiloxane mit Viskositäten zwischen 10'000 und 200'000 mPa s, bevorzugt zwischen 20'000 und 150'000 mPa·s eingesetzt werden. Damit kann eine besonders gute Lagerstabilität und besonders niedrige Tendenz zur Phasenseparation in der Komponente **B** erreicht werden.

Solche Weichmacher **W** sind dem Fachmann der Siliconformulierung bestens bekannt und diese werden beispielsweise unter der Handelsnamenserie Wacker^{®} AK von Wacker Chemie, Deutschland vertrieben und weiter unten detaillierter beschrieben. Diese nicht reaktiven Polydiorganosiloxane werden auch als Siliconöle bezeichnet. Sie sind in verschiedenen Kettenlängen und damit Viskositäten erhältlich und haben vor allem den Zweck, Festkörperbestandteile wie Füllstoffe gut einmischbar und mit den anderen Bestandteilen homogenisierbar zu machen sowie die mechanischen Eigenschaften und Fliesseigenschaften der Zusammensetzung zu verbessern.

Komponente **B** enthält bevorzugt zwischen 30 Gew.-% und 50 Gew.-% an Weichmacher **W.**

Komponente **A** enthält bevorzugt zwischen 1 Gew.-% und 15 Gew.-% an Weichmacher **W.** Komponente **A** benötigt weniger oder gar keinen Weichmacher **W,** da Komponente **A** bereits flüssige Hydroxylgruppen terminierte Polydiorganosiloxane enthält.

Es kann von Vorteil sein, verschiedene solche Weichmacher **W** zu kombinieren, beispielsweise mit unterschiedlichen Viskositäten oder unterschiedlichen Endgruppen.

Bevorzugt enthält Komponente **B** mindestens einen Weichmacher **W** mit Vinylsilan-Endgruppen oder Methylsilan-Endgruppen.

### Katalysator K

Die Komponente **B** der zweikomponentigen Siliconzusammensetzung umfasst weiterhin mindestens einen Katalysator **K** für die Vernetzung von Polydiorganosiloxanen.

Katalysator **K** ist ein Zinnkomplex mit zwei Mercaptidliganden nach Formel (V) ist, 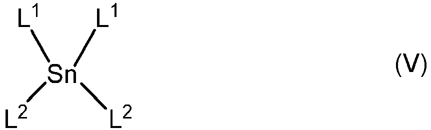 wobei Liganden L¹ unabhängig voneinander für über Schwefel koordinierte Alkylmercaptipde stehen, insbesondere C₆ bis C₁₆ Alkylmercaptide, bevorzugt C₈ bis C₁₄ Alkylmercaptide, meist bevorzugt C₁₀ bis C₁₂ Alkylmercaptide, wobei Liganden L¹ optional Methyldialkoxysilagruppen, bevorzugt Methyldimethoxysilangruppen aufweisen, und Liganden L² unabhängig voneinander für C₃ bis C₁₈ Alkylliganden stehen, insbesondere für C₆ bis C₁₄ Alkylliganden, bevorzugt für C₆ bis C₁₂ Alkylliganden.

Katalysator **K** ist also ein Sn(IV)-Komplex mit zwei C₃ bis C₁₈ Alkylliganden L², insbesondere zwei C₆ bis C₁₄ Alkylliganden L².

Es hat sich herausgestellt, dass sehr kurze Alkylliganden, wie beispielsweise Methylliganden, zu einer schlechten Lagerstabilität der Komponente **B** führen und daher als Ligand L² nicht geeignet sind.

Bevorzugt sind Liganden L² C₆ bis C₁₄ Alkylliganden, insbesondere Phenyl-, Hexyl-, Octyl-, oder Dodecylliganden, meist bevorzugt Octylliganden. Diese bilden besonders lagerstabile Komplexe und eine besonders gute erfindungsgemässe Aktivität in der Zusammensetzung.

Weiterhin weist Katalysator **K** zwei über die Schwefelatome koordinierte Mercaptidlinganden L¹, insbesondere C₆ bis C₁₆ Alkylmercaptide, wobei Liganden L¹ optional Methyldialkoxysilagruppen, bevorzugt Methyldimethoxysilangruppen aufweisen, auf. Der Begriff Mercaptid wird synonym mit dem Begriff Thiolat verwendet und beschreibt deprotonierte R-S⁻ Liganden, wobei R ein organischer Rest ist.

Es hat sich herausgestellt, dass die beiden Liganden L¹ nicht einen einzigen bidentaten Liganden mit zwei Thiolatgruppen darstellen können, da der Chelateffekt die erfindungsgemässe Wirkung möglicherweise beeinträchtigt. Daher müssen Liganden L¹ zwei einzeln koordinierte Alkylmercaptidliganden sein. Es ist bevorzugt, dass diese Liganden keine weiteren an Zinn koordinierbare Heteroatome aufweisen, wie beispielsweise Amino- oder Carboxylatgruppen. Bevorzugt umfassen Liganden L¹ keine funktionellen Gruppen mit Heteroatomen, ausser Methyldialkoxysilangruppen. Methyldialkoxysilangruppen, insbesondere Methyldimethoxysilangruppen, können hingegen vorteilhaft sein, da sie sich ins Polymergerüst einbauen können und dadurch die Mobilität der Schwefelliganden einschränken. Dies hat den Vorteil, dass unerwünschte Migrationseffekte und/oder allfällige Vergilbungen verhindert werden. Es ist allerdings bevorzugt, wenn die Methylalkoxysilangruppen, falls vorhanden, dieselben Alkoxysilangruppen aufweisen wie die Vernetzer **V.**

Weiterhin hat sich herausgestellt, dass Liganden L¹ mit Trialkoxysilangruppen nicht geeignet sind, da sie die Wirksamkeit des Katalysators und die Lagerstabilität der Zusammensetzung beeinträchtigen.

Bevorzugt sind Liganden L¹ Dodecylthiolatliganden, Octadecylthiolatliganden, oder 3-Mercaptopropyl-methyldimethoxysilan-Liganden, welche über das Schwefelatom koordiniert sind.

Besonders bevorzugt sind Dodecylthiolatliganden. Diese führen zu einem besonders wirksamen, besonders lagerstabilen Katalysator **K.** Dodecylthioliganden haben den weiteren Vorteil, dass sie, im Vergleich zu Liganden mit kürzeren Alkylketten, einen kaum wahrnehmbaren Geruch haben, aber trotzdem, im Vergleich zu Liganden mit längeren Alkylketten, bei Raumtemperatur flüssig und somit gut handhabbar sind.

Weiterhin besonders bevorzugt sind 3-Mercaptopropyl-methyldimethoxysilan-Liganden, welche über das Schwefelatom koordiniert sind.

Diese führen zu einem besonders wirksamen Katalysator **K** und zu besonders niedriger Vergilbungsneigung der ausgehärteten Zusammensetzung.

In einer besonders bevorzugten Ausführungsform von Katalysator **K** stehen in der Formel (V) beide Liganden L¹ für Dodecylmercaptid und beide Liganden L² für Octyl.

In einer weiteren besonders bevorzugten Ausführungsform von Katalysator **K** stehen in der Formel (V) beide Liganden L¹ für 3-Mercaptopropyl-methyldimethoxysilan und beide Liganden L² für Octyl.

Katalysatoren **K** können einfach hergestellt werden, indem beispielsweise Dialkylzinndiacetate mit den entsprechenden Mercaptanliganden in einem molaren Verhältnis von ungefähr 2:1 (Ligand : Zinnkomplex) unter Luftausschluss miteinander während 24h bei 23 °C verrührt werden. Dabei durch Ligandenaustausch entstehende Nebenprodukte, wie beispielsweise Essigsäure, können vorteilhafterweise, zum Beispiel destillativ bei erniedrigtem Druck, entfernt werden.

Selbstverständlich ist es möglich oder in gewissen Fällen sogar bevorzugt, Mischungen verschiedener Katalysatoren einzusetzen.

Der Anteil des Katalysators **K** für die Vernetzung von Polydiorganosiloxanen beträgt vorzugsweise 0.05 bis 10 Gew.-%, insbesondere 0.1 bis 5 Gew.-%, bevorzugt 0.25 bis 4 Gew.-%, bezogen auf Komponente **B** der zweikomponentigen Siliconzusammensetzung.

Die Menge an Katalysator **K** beeinflusst die Topfzeit und den einstellbaren Bereich der Topfzeit der gemischten zweikomponentigen Zusammensetzung. Je höher der Gehalt an Katalysator, desto kürzer wird tendenziell die einstellbare Topfzeit sowie desto schneller wird die anschliessende Aushärtung. Diese Effekte werden jedoch in hohem Masse auch von der Wahl der Vernetzer beeinflusst. Darauf wird weiter unten eingegangen.

Die Komponente **B** der zweikomponentigen Siliconzusammensetzung enthält weiterhin mindestens einen, bevorzugt mehrere verschiedene Vernetzer für Siliconzusammensetzungen. Als Vernetzer werden dabei organische Siliciumverbindungen mit hydrolysierbaren Alkoxysilangruppen bezeichnet. Die vorliegende Erfindung unterscheidet drei verschiedene Vernetzertypen **V1, V2** und **V3,** welche im Folgenden näher erläutert werden.

Es ist vorteilhaft und bevorzugt für die Wirkung der vorliegenden Erfindung, wenn alle Vernetzer in der Zusammensetzung dieselben Alkoxysilangruppen tragen. Beispielsweise können alle Vernetzer Methoxysilangruppen oder alle Vernetzer Ethoxysilangruppen aufweisen. Mischungen verschiedener Alkoxysilangruppen sind meist nicht vorteilhaft und können den Effekt der Erfindung behindern oder gar verhindern.

Es können jedoch durchaus Mischungen von Vernetzern mit Methoxy- und Ethoxysilangruppen eingesetzt werden, beispielsweise wenn der am langsamsten hydrolysierende Vernetzer **V** anstatt Methoxysilangruppen Ethoxysilangruppen aufweist und alle anderen, schnelleren Vernetzer **V** Methoxysilangruppen. Auch wenn ein Gemisch von Vernetzern **V** eingesetzt wird, können Vernetzer mit einem sehr kleinen Anteil an der Mischung andere Alkoxysilangruppen aufweisen als der Rest der Vernetzer, die jedoch bezüglich Alkoxysilangruppen dann gleichartig sein sollten. In solchen Mischungen wird der Effekt der Erfindung nicht beeinträchtigt.

### Vernetzer V1

Komponente **B** der erfindungsgemässen Zusammensetzung enthält zwischen 0 und 50 Gew.-%, bezogen auf Komponente **B,** mindestens eines ersten Organosilans **V1** nach Formel (I), 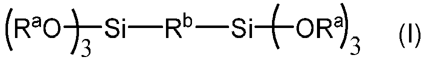
wobei R^{a} für ein Wasserstoffatom oder einen monovalenten, linearen oder verzweigten Alkylrest mit 1 bis 6 Kohlenstoffatomen steht,
R^{b} für einen divalenten, linearen oder verzweigten Alkylrest oder Alkenylrest mit 2 bis 20 Kohlenstoffatomen steht.

Bevorzugt steht R^{a} für ein Wasserstoffatom oder einen Methyl- oder Ethylrest. Am meisten bevorzugt steht R^{a} für ein Wasserstoffatom oder einen Methylrest. Silane **V1** mit Ethylresten als R^{a}, welche nach Hydrolyse in Wasserstoffatome überführt werden, sind besonders vorteilhaft, weil sie einerseits eine besonders gut kontrollierbare Topfzeiteinstellung ermöglichen, trotzdem sehr rasch aushärten, und darüber hinaus keine giftigen Methanolemissionen verursachen.

Silane **V1** mit Methylresten als R^{a}, welche nach Hydrolyse in Wasserstoffatome überführt werden, sind besonders vorteilhaft, weil sie nach Ende der Topfzeit besonders rasch aushärten, und trotzdem lange Topfzeiten und lange Mischeroffenzeiten ermöglichen.

Bevorzugt steht R^{b} für einen linearen Alkylrest oder Alkenylrest mit 2 bis 12 Kohlenstoffatomen, bevorzugt mit 2 bis 6 Kohlenstoffatomen, meist bevorzugt einen Ethylrest, einen Propylrest, einen Ethylenrest oder einen Propenylrest.

Organosilan **V1** ist nicht unbedingt nötig für den Effekt der Erfindung, weist aber in Kombination mit Organosilan **V2** den Vorteil auf, dass es bei Anwesenheit in der Formulierung die Topfzeit besser einstellbar macht. Unter Verwendung eines Organosilans **V1** kann die maximal mögliche Topfzeit der Zusammensetzung erhöht werden, ohne jedoch die Aushärtegeschwindigkeit nach Ende der Topfzeit wesentlich zu verlangsamen.

Bevorzugte Ausführungsformen der erfindungsgemässen Zusammensetzung enthalten zwischen 10 Gew.-% und 30 Gew.-%, bevorzugt zwischen 12 Gew.-% und 20 Gew.-%, an Organosilan **V1,** bezogen auf Komponente **B.**

### Vernetzer V2

Komponente **B** der erfindungsgemässen Zusammensetzung enthält zwischen 2 und 60 Gew.-%, bezogen auf Komponente **B,** mindestens eines zweiten Organosilans **V2** nach Formel (II), 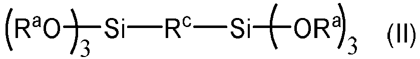
wobei R^{a} dieselbe Bedeutung wie für das Organosilan **V1** beschrieben aufweist, und
R^{c} für einen divalenten, linearen oder verzweigten Alkylrest mit 2 bis 20 Kohlenstoffatomen steht, der mindestens eine sekundäre Aminogruppe sowie optional eine Hydroxylgruppe sowie einen Ethersauerstoff enthält.

Bevorzugt besitzt Organosilan **V2** eine Struktur wie in Formel (IIa) beschrieben, 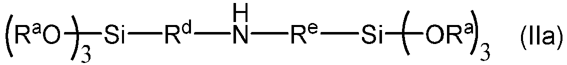
wobei R^{d} für einen divalenten, linearen oder verzweigten Alkylrest mit 2 bis 10 Kohlenstoffatomen steht, der optional eine Hydroxylgruppe sowie einen Ethersauerstoff enthält, und
R^{e} für einen divalenten, linearen oder verzweigten Alkylrest mit 2 bis 10 Kohlenstoffatomen steht, der optional eine sekundäre Aminogruppe enthält.

Bevorzugte Ausführungsformen der erfindungsgemässen Zusammensetzung enthalten zwischen 5 Gew.-% und 50 Gew.-%, bevorzugt zwischen 10 Gew.-% und 45 Gew.-%, an Organosilan **V2**, bezogen auf Komponente **B.**

In einer bevorzugten Ausführungsform handelt es sich beim Organosilan **V2** um ein Organosilan **V2a**, bei dem die Reste R^{d} und R^{e} in Formel (IIa) beide für einen divalenten, linearen oder verzweigten Alkylrest mit 2 bis 10 Kohlenstoffatomen stehen, insbesondere einen Propylrest.

In einer anderen besonders bevorzugten Ausführungsform handelt es sich beim Organosilan **V2** um ein Organosilan **V2b**, bei dem Rest R^{e} in Formel (IIa) für einen divalenten, linearen oder verzweigten Alkylrest mit 2 bis 10 Kohlenstoffatomen steht, der optional eine sekundäre Aminogruppe enthält, insbesondere einen Propylrest oder einen Cs-Alkylrest, der eine sekundäre Aminogruppe in der Kohlenstoffkette aufweist, und Rest R^{d} einen divalenten, linearen oder verzweigten Alkylrest mit 2 bis 10 Kohlenstoffatomen, insbesondere einen Propylrest, enthält sowie zusätzlich eines der beiden Strukturelemente enthält, die in Formel (IIb) dargestellt sind. Dabei steht die NH Gruppe in Formel (IIb) für die NH Gruppe in Formel (IIa) und die gestrichelte Linie am Sauerstoffatom ist an den divalenten, linearen oder verzweigten Alkylrest mit 2 bis 10 Kohlenstoffatomen, insbesondere den Propylrest, gebunden.

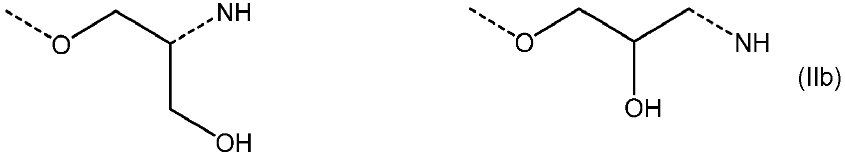

Organosilane **V2a** sind kommerziell erhältlich, beispielsweise unter den Handelsnamen Dynasylan^{®} 1122 und Dynasylan^{®} 1124 (Evonik). Dynasylan^{®} 1124 ist Bis(trimethoxysilylpropyl)amin und Dynasylan^{®} 1122 ist Bis(trimethoxysilylpropyl)amin.

Organosilane **V2b** sind leicht aus kommerziell verfügbaren Organosilanen herstellbar, beispielsweise aus der Reaktion einer äquimolaren Menge an 3-Aminopropyltriethoxysilan mit 3-Glyxidoxypropyltriethoxysilan unter Wasserausschluss bis zur vollständigen Umsetzung der Epoxygruppen.

Eine besonders bevorzugte Ausführungsform von Organosilan **V2b** weist in Formel (IIa) für Rest R^{e} einen divalenten C₅ Alkylrest auf, welcher eine sekundäre Aminogruppe in der Kohlenstoffkette aufweist und für Rest R^{d} einen linearen, divalenten C₆ Alkylrest, welcher einen Ethersauerstoff in der Kohlenstoffkette aufweist sowie eine Hydroxylgruppe aufweist. Dieses besitzt bevorzugt ausschliesslich Methoxysilangruppen als Alkoxysilangruppen. Ein solches Organosilan ist beispielsweise herstellbar aus der Reaktion einer äquimolaren Menge von N-(2-Aminoethyl)-3-aminopropyltrimethoxysilan (z.B. Geniosil^{®} GF 91, Wacker) mit 3-Glyxidoxypropyltrimethoxysilan (z.B. Geniosil^{®} GF 80, Wacker) unter Wasserausschluss bis zur vollständigen Umsetzung der Epoxygruppen.

In bevorzugten Ausführungsformen der erfindungsgemässen Zusammensetzung umfasst Organosilan **V2** ein Organosilan **V2a** wie vorgängig beschrieben, wobei Organosilan **V2a** in einer Menge von zwischen 5 Gew.-% und 20 Gew.-% bezogen auf Komponente **B** enthalten ist, und weiterhin umfasst Organosilan **V2** ein Organosilan **V2b** wie vorgängig beschreiben, wobei Organosilan **V2b** in einer Menge von zwischen 5 Gew.-% und 20 Gew.-% bezogen auf Komponente **B** enthalten ist, und die Zusammensetzung umfasst weiterhin mindestens ein Organosilan **V3** mit einer Menge von zwischen 2.5 Gew.-% und 20 Gew.-% bezogen auf Komponente **B,** und der Katalysator **K** ist in einer Menge von zwischen 0.1 Gew.-% und 1.5 Gew.-%, bezogen auf Komponente **B,** in der Komponente **B** enthalten. Diese Ausführungsform ermöglicht eine besonders geeignete, ausreichend lange Topfzeit und Mischeroffenzeit und eine besonders rasche Aushärtung nach Ende der Topfzeit und eine besonders gute Lagerstabilität insbesondere der Komponente **B.**

In bevorzugten Ausführungsformen der erfindungsgemässen Zusammensetzung wird eine Mischung aus Organosilan **V2a** und Organosilan **V2b** als Organosilan **V2** eingesetzt. In diesen Ausführungsformen beträgt der Gehalt an Katalysator **K** bevorzugt zwischen 0.1 Gew.-% und 2 Gew.-%, insbesondere zwischen 0.2 Gew.-% und 1 Gew.-%, bezogen auf Komponente **B.** Dies ermöglicht eine sehr genau einstellbare, anwenderfreundliche aber doch kurze bis mittlere Topfzeit und eine sehr rasche Aushärtung und ist besonders für maschinelle, automatisierte Applikation mit kurzen Taktzeiten geeignet, sowie besonders gut für eine frei wählbare Topfzeit mittels verschiedenen Mischungsverhältnissen der Komponente **A** und **B.** Dies ist besonders vorteilhaft für eine flexible Applikation oder bei komplexen Anwendungen, wo eine wechselnde Topfzeit aber stets identische Endeigenschaften der gehärteten Zusammensetzung erwünscht ist.

In dieser Ausführungsform werden die Organosilane **V2a** und **V2b** bevorzugt im Gewichtsverhältnis zwischen 1:2 und 2:1 in der Formulierung eingesetzt. Bevorzugte Ausführungsformen dieser Ausführungsform der erfindungsgemässen Zusammensetzung enthalten zwischen 5 Gew.-% und 25 Gew.-%, bevorzugt zwischen 7.5 Gew.-% und 22.5 Gew.-%, an Organosilan **V2a,** bezogen auf Komponente **B,** sowie zwischen 0 Gew.-% und 25 Gew.-%, bevorzugt zwischen 5 Gew.-% und 22.5 Gew.-%, an Organosilan **V2b,** bezogen auf Komponente **B.**

### Vernetzer V3

Die Komponente **B** der zweikomponentigen Siliconzusammensetzung umfasst weiterhin bevorzugt zwischen 0 und 25 Gew.-%, bezogen auf Komponente **B,** weitere Organosilane **V3** mit hydrolysierbaren Alkxoysilangruppen Si-OR^{a}, welche nicht unter die Formeln (I) und (II) fallen. Diese dienen ebenfalls als Vernetzer, sind jedoch optional.

Das zusätzliche Organosilan **V3** ist insbesondere ein Silan der Formel (III).

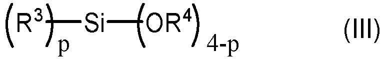

Der Rest R³ steht dabei unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.

Der Rest R⁴ steht für einen Rest R^{a} wie weiter oben beschrieben.

Der Index p steht für einen Wert von 0 bis 4, mit der Massgabe, dass falls p für einen Wert von 3 oder 4 steht, mindestens p-2 Reste R³ jeweils mindestens eine mit den Hydroxylgruppen des Polydiorganosiloxans **P** reaktive, insbesondere kondensierbare, Gruppe, also beispielsweise eine Hydroxylgruppe aufweisen. Insbesondere steht p für einen Wert von 0, 1 oder 2, bevorzugt für einen Wert von 0.

Für die Wahl des Silans der Formel (III) als Vernetzer für Polydiorganosiloxane können unterschiedliche Anforderungen an die zweikomponentige Siliconzusammensetzung ausschlaggebend sein. Einerseits spielt die Reaktivität des Silans eine wichtige Rolle, andererseits können auch toxikologische Gründe für die Wahl des Vernetzers ausschlaggebend sein.

Beispiele geeigneter Silane der Formel (III) sind Methyltrimethoxysilan, Chlormethyltrimethoxysilan, Ethyltrimethoxysilan, Propyltrimethoxysilan, Octyltrimetoxysilan, Methyltriethoxysilan, Phenyltriethoxysilan, Methyltripropoxysilan, Phenyltripropoxysilan, Octyltriethoxysilan, Tetramethoxysilan, Tetraethoxysilan, Tetra-n-propoxysilan oder Tetra-n-butoxysilan. Besonders bevorzugt handelt es sich beim Silan der Formel (III) um Methyltrimethoxysilan, Dimethyltrimethoxysilan oder Tetramethoxysilan oder deren Mischung, ganz besonders bevorzugt Methyltrimethoxysilan, Octyltrimethoxysilan, oder Mischungen davon.

Es hat sich herausgestellt, dass Vinyltrimethoxysilan oder Vinyltriethoxysilan nicht als Vernetzer geeignet sind, da die Vinylgruppe die Lagerstabilität stark beeinträchtigt.

Mit einer Mischung aus Methyltrimethoxysilan und Octyltrimethoxysilan als Vernetzer **V3** kann die Topfzeit und die Mischeroffenzeit einer erfindungsgemässen Siliconzusammensetzung eingestellt werden, wobei eine höhere Menge an Octyltrimethoxysilan zu einer längeren Topf- und Mischeroffenzeit führt.

Weiterhin können die Silane, die in Komponente B enthalten sind, auch bereits teilweise (ein Teil aller R⁴ = H) oder vollständig hydrolysiert (alle R⁴ = H) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren kommen kann, welche durch Kondensation von hydrolysierten Silanen gebildet werden. Demnach können als Vernetzer für die zweikomponentige Siliconzusammensetzung auch oligomere Siloxane eingesetzt werden.

Beispielsweise sind geeignete oligomere Siloxane Hexamethoxydisiloxan, Hexaethoxydisiloxan, Hexa-n-propoxydisiloxan, Hexa-n-butoxydisiloxan, Octamethoxytrisiloxan, Octaethoxytrisiloxan, Octa-n-butoxytrisiloxan, Decamethoxytetrasiloxan und Decaethoxytetrasiloxan.

Selbstverständlich kann als Vernetzer für die zweikomponentige Siliconzusammensetzung auch eine beliebige Mischung der vorhergehend genannten Silane eingesetzt werden.

Der Anteil des Organosilans **V3** beträgt vorzugsweise 0.1 bis 25 Gew.-%, insbesondere 0.5 bis 20 Gew.-%, bevorzugt 1 bis 15 Gew.-%, bezogen auf Komponente **B** der zweikomponentigen Siliconzusammensetzung.

Die zweikomponentige Siliconzusammensetzung kann in einer oder beiden der Komponenten **A** und **B** gegebenenfalls noch weitere Bestandteile enthalten. Derartige zusätzliche Bestandteile sind insbesondere Weichmacher **W** wie weiter oben beschrieben, welche zwingend sind in Komponente **B,** anorganische und/oder organische Füllstoffe, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufsmittel, Thixotropierungsmittel und weitere dem Fachmann bekannte gängige Rohstoffe und Additive.

Beim Einsatz von derartigen optionalen Bestandteilen ist es wichtig darauf zu achten, dass Bestandteile, welche durch Reaktion untereinander oder mit anderen Inhaltsstoffen die Lagerstabilität der Zusammensetzung beeinträchtigen könnten, getrennt voneinander, aufbewahrt werden.

Weiterhin ist es vorteilhaft, alle genannten, in der zweikomponentigen Siliconzusammensetzung gegebenenfalls vorhandenen, Bestandteile so auszuwählen, dass die Lagerstabilität der beiden Komponenten der zweikomponentigen Siliconzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen zweikomponentigen Siliconzusammensetzung führende Reaktionen während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Vorzugsweise weist die Zusammensetzung in einer oder beiden der Komponenten **A** und **B** weiterhin mindestens einen Füllstoff auf, insbesondere in Komponente **A.** Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Es können sowohl aktive, als auch passive Füllstoffe in der zweikomponentigen Siliconzusammensetzung eingesetzt werden. Bei aktiven Füllstoffen treten chemische oder physikalische Wechselwirkungen mit dem Polymer auf, bei passiven Füllstoffen treten diese nicht oder nur in untergeordnetem Umfang auf.

Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, oder mit vorzugsweise hydrophoben Silanen, bzw. Siloxanen beschichtet sind, calcinierte Kaoline, Aluminiumoxide, Aluminiumhydroxide, Kieselsäuren, insbesondere hochdisperse Kieselsäuren aus Pyrolyseprozessen, Russ, insbesondere industriell hergestellter Russ ("carbon black"), der jedoch in Komponente **B** nur eingeschränkt eingesetzt werden kann, Aluminiumsilicate, Magnesium-Aluminiumsilicate, Zirkoniumsilicate, Quarzmehl, Christobalitmehl, Diatomeenerde, Glimmer, Eisenoxide, Titanoxide, Zirconiumoxide, Gips, Annalin, Bariumsulfat (BaSO₄, auch Baryt oder Schwerspat genannt), Borcarbid, Bornitrid, Graphit, Kohlefasern, Glasfasern oder Glashohlkugeln, deren Oberfläche gegebenenfalls mit einem Hydrophobierungsmittel behandelt ist. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

In einer bevorzugten Ausführungsform enthält die Siliconzusammensetzung hochdisperse Kieselsäuren aus Pyrolyseprozessen oder gefällte und/oder gemahlene Calciumcarbonate, insbesondere hydrophob beschichtete, als Füllstoff.

Komponente **A** enthält bevorzugt mindestens einen Füllstoff, insbesondere gefällte und/oder gemahlene, bevorzugt hydrophob beschichtete, Calciumcarbonate.

Komponente **B** enthält bevorzugt hochdisperse Kieselsäuren aus Pyrolyseprozessen. Komponente **B** muss weniger als 5 Gew.-% Russ, bezogen auf Komponente **B,** enthalten. Bevorzugt enthält Komponente **B** keinen Russ. Russ behindert die erfindungsgmässe Wirkung des Katalysators **K.**

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte zweikomponentige Siliconzusammensetzung.

Besonders geeignet als Haftvermittler sind Alkoxysilane, welche vorzugsweise mit funktionellen Gruppen substituiert sind. Die funktionelle Gruppe ist beispielsweise eine Aminopropyl-, Glycidoxypropyl- oder Mercaptopropylgruppe. Bevorzugt sind aminofunktionelle Gruppen. Gewisse dieser Haftvermittler fallen bereits unter die Definition des Vernetzers **V3,** müssen also diesbezüglich berücksichtigt werden. Bei den Alkoxygruppen derartiger Silane handelt es sich meist um eine Methoxy- oder Ethoxygruppe. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von Haftvermittlern einzusetzen. Weiterhin eignen sich als Haftvermittler beispielsweise auch aminofunktionelle Alkylsilsesquioxane wie aminofunktionelles Methylsilsesquioxan oder aminofunktionelles Propylsilsesquioxan, alkoxylierte Alkylenamine, insbesondere ethoxylierte und/oder propoxylierte Alkylendiamine, sowie weitere, insbesondere substituierte, Oligomere, Polymere oder Copolymere auf Basis von Polyalkylenglykolen.

Es gilt jedoch die Massgabe, dass die Zusammensetzung weniger als 10 mol-%, bezogen auf die Menge an Organosilan **V2,** an Organosilanen mit Epoxidgruppen, bzw. Glycidoxygruppen, enthält. Bevorzugt enthält die Zusammensetzung weniger als 5 mol-%, insbesondere weniger als 1 mol-%, bezogen auf die Menge an Organosilan **V2,** an Organosilanen mit Epoxidgruppen. Die Anwesenheit von Organosilanen mit Epoxygruppen in Mengen über diesen Bereichen kann dazu führen, dass der erfindungsgemässe Effekt signifikant behindert wird und die Zusammensetzung nicht mehr richtig aushärtet.

Es ist dem Fachmann klar, dass bei der Verwendung von Silanen als Haftvermittler die Möglichkeit besteht, dass diese je nach Bedingungen, beispielsweise Feuchtigkeit, teilweise oder vollständig hydrolysiert vorliegen können. Weiterhin ist dem Fachmann bekannt, dass es bei der Anwesenheit solcher teilweise oder vollständig hydrolysierten Silane durch Kondensationsreaktionen zur Bildung von oligomeren Siloxanen, insbesondere zu Dimeren und/oder Trimeren kommen kann.

Der Anteil des Haftvermittlers, welcher bevorzugt nicht unter die Definition von Vernetzer **V3** oder **V2b** fällt, beträgt vorzugsweise 0.1 bis 15 Gew.-%, insbesondere 1 bis 10 Gew.-%, bevorzugt 1 bis 5 Gew.-%, der gesamten zweikomponentigen Siliconzusammensetzung. In bevorzugten Ausführungsformen, insbesondere unter Verwendung von Organosilanen **V2** und/oder Vernetzern **V3,** welche Haftvermittlerwirkung aufweisen können, enthält die Zusammensetzung jedoch vorzugsweise keine weiteren Haftvermittler.

Dem Fachmann ist bestens bekannt, dass Bestandteile wie sie insbesondere vorhergehend aufgeführt sind nicht nur eine einzige, ihnen zugeschriebene Funktion oder Wirkung aufweisen können. Vielmehr ist es üblich, dass ein einzelner Bestandteil oder eine einzelne Verbindung mehrere Funktionen aufweist. So sind beispielsweise manche Haftvermittler auch Vernetzer oder Füllstoffe gleichzeitig auch Rheologiemodifikatoren oder dergleichen. Beispielsweise weisen die Organosilane **V2,** und in besonderem Masse **V2b,** sowie gewisse Vernetzer **V3** eine gute Haftvermittlerwirkung auf.

Eine besonders bevorzugte Ausführungsform der Komponente **A** der erfindungsgemässen Siliconzusammensetzung umfasst:
zwischen 25 Gew.-% und 60 Gew.-%, bevorzugt zwischen 30 Gew.-% und 50 Gew.-%, bezogen auf Komponente **A,** des mindestens einen Hydroxylgruppen terminierten Polydiorganosiloxans **P** wie vorgängig beschrieben;
zwischen 0.05 Gew.-% und 5.0 Gew.-%, bevorzugt zwischen 0.1 Gew.-% und 2 Gew.-% emulgiertes Wasser, bezogen auf Komponente **A**; sowie gegebenenfalls Weichmacher **W,** Füllstoffe, Formulierungsadditive, Pigmente, und weitere Additive wie vorgängig beschrieben.
Besonders bevorzugte Ausführungsformen dieser Ausführungsform enthalten als Polymer **P** eine Mischung aus zwischen 25 Gew.-% und 50 Gew.-%, bevorzugt zwischen 30 Gew.-% und 45 Gew.-%, bezogen auf Komponente **A,** Polymer **P1** wie vorgängig beschrieben; und
zwischen 0 Gew.-% und 10 Gew.-%, bevorzugt zwischen 0.5 Gew.-% und 5 Gew.-%, bezogen auf Komponente **A,** Polymer **P3** wie vorgängig beschrieben.

Eine besonders bevorzugte Ausführungsform der Komponente **B** der erfindungsgemässen Siliconzusammensetzung umfasst:
zwischen 0.1 Gew.-% und 4 Gew.-%, bevorzugt zwischen 0.25 Gew.-% und 3 Gew.-%, bezogen auf Komponente **B,** Katalysator **K** wie vorgängig beschrieben; sowie
zwischen 25 Gew.-% und 80 Gew.-%, bevorzugt zwischen 50 Gew.-% und 70 Gew.-%, bezogen auf Komponente **B,** Weichmacher **W** wie vorgängig beschrieben; sowie
zwischen 0 Gew.-% und 25 Gew.-%, bevorzugt zwischen 0 Gew.-% und 15 Gew.-%, bezogen auf Komponente **B,** Organosilan **V1** wie vorgängig beschrieben; sowie
zwischen 5 Gew.-% und 25 Gew.-%, bevorzugt zwischen 5 Gew.-% und 20 Gew.-%, bezogen auf Komponente **B,** Organosilan **V2a** wie vorgängig beschrieben; sowie
zwischen 0 Gew.-% und 25 Gew.-%, bevorzugt zwischen 1 Gew.-% und 20 Gew.-%, bezogen auf Komponente **B,** Organosilan **V2b** wie vorgängig beschrieben; sowie
zwischen 0.5 Gew.-% und 25 Gew.-%, bevorzugt zwischen 1 Gew.-% und 20 Gew.-%, bezogen auf Komponente **B**, Organosilan **V3** wie vorgängig beschrieben; sowie
gegebenenfalls Füllstoffe, Formulierungsadditive, Pigmente, und weitere Additive wie vorgängig beschrieben.

Die erfindungsgemässe zweikomponentige Siliconzusammensetzung wird typischerweise in einer Verpackung aufbewahrt, welche zwei voneinander getrennte Kammern aufweist. Die Komponente **A** ist hierbei in der einen Kammer und die Komponente **B** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **A** und **B** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in US 2003/0051610 A1.

In einer grosstechnischen Anlage werden die beiden Komponenten **A** und **B** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Insbesondere wird die erfindungsgemässe zweikomponentige Siliconzusammensetzung so eingesetzt, dass das Gewichtsverhältnis der Komponente **A** zu Komponente **B** ≥ 1:1, insbesondere von 3:1 bis 15:1, bevorzugt von 10:1 bis 14:1, beträgt.

Ein Vorteil des Einsatzes der Komponenten **A** und **B** im beschriebenen, bevorzugten Gewichtsverhältnis ist, dass bestehende Anlagen zur Förderung und Applikation von zweikomponentigen Siliconzusammensetzungen in dieser Art und Weise sehr weit verbreitet sind und eine Umrüstung der Anlagen auf die Applikation der Komponenten **A** und **B** im Gewichtsverhältnis von beispielsweise 1:1 auf Verbraucherseite mit hohem Aufwand verbunden wäre.

In denselben oder anderen bevorzugten Ausführungsformen wird das Mischverhältnis über das Volumen der Komponenten **A** und **B** gesteuert oder festgelegt. Dies ist insbesondere bei automatisierter Applikation mit individuellem Pumpen der beiden Komponenten und Zuführen zu einem statischen oder dynamischen Mischer praktikabel und vorteilhaft. In solchen Fällen beträgt das Volumenmischverhältnis der Komponente **A** zu Komponente **B** bevorzugt ≥ 1:1, insbesondere von 1.5:1 bis 15:1, bevorzugt von 2:1 bis 10:1.

Bei automatisiertem Pumpen und Mischen ist es in einigen Ausführungsformen vorteilhaft, wenn sich die Volumenanteile der Komponenten **A** und **B** nicht übermässig unterscheiden, um eine möglichst homogene Mischung zu gewährleisten. In einigen solchen Ausführungsformen ist das Volumenmischverhältnis der Komponente **A** zu Komponente **B** bevorzugt von 1.1:1 bis 5:1, insbesondere von 1.5:1 bis 3:1, am meisten bevorzugt von 1.8:1 bis 2.5:1.

Weiterhin bevorzugt umfasst die Komponente **B** keine vernetzbaren Polydiorganosiloxane. Der Vorteil davon ist eine bessere Lagerstabilität der Komponente **B.**

Insbesondere Komponente **B** der vorhergehend beschriebenen zweikomponentigen Siliconzusammensetzung wird unter Ausschluss von Feuchtigkeit hergestellt und aufbewahrt. Getrennt voneinander sind die beiden Komponenten lagerstabil, das heisst, sie können unter Ausschluss von Feuchtigkeit in einer geeigneten Verpackung oder Anordnung, wie sie vorhergehend beschreiben wurde, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändern. Üblicherweise wird die Lagerstabilität über die Messung der Viskosität oder der Reaktivität über die Zeit ermittelt.

Bei der Applikation der zweikomponentigen Siliconzusammensetzung werden die Komponenten **A** und **B,** beispielsweise durch Rühren, Kneten Walzen oder dergleichen, insbesondere jedoch über einen Statikmischer, miteinander vermischt. Dabei kommen die Hydroxylgruppen des Hydroxylgruppen terminierten Polydiorganosiloxans **P** in Kontakt mit den hydrolysierbaren oder gegebenenfalls mit bereits hydrolysierten Gruppen des Vernetzers, wodurch es zur Aushärtung der Zusammensetzung durch Kondensationsreaktionen kommt. Der Kontakt der Siliconzusammensetzung mit Wasser, insbesondere der Kontakt von Wasser das in der Komponente **A** enthalten ist mit den Vernetzern **V**, bei der Applikation kann die Vernetzung ebenfalls begünstigen, da durch Reaktion des Wassers mit den hydrolysierbaren Gruppen des Vernetzers Silanolgruppen gebildet werden, deren Reaktivität gegenüber den Hydroxylgruppen des Polydiorganosiloxans **P** erhöht ist. Die Aushärtung der zweikomponentigen Siliconzusammensetzung erfolgt insbesondere bei Raumtemperatur.

Bei der Vernetzung der zweikomponentigen Siliconzusammensetzung entstehen als Reaktionsprodukte der Kondensationsreaktion insbesondere auch Verbindungen der Formel HO-R^{a}, wobei R^{a} bereits vorhergehend beschrieben wurde. Bevorzugt handelt es sich bei diesen Nebenprodukten der Kondensationsreaktion um Verbindungen, welche weder die Zusammensetzung noch das Substrat, auf dem die Zusammensetzung appliziert wird, beeinträchtigen. Meist bevorzugt handelt es sich beim Reaktionsprodukt der Formel HO-R^{a} um eine Verbindung, welche sich leicht aus der vernetzenden oder der bereits vernetzten Zusammensetzung verflüchtigt.

Weiterhin betrifft die Erfindung eine gehärtete Siliconzusammensetzung wie sie erhältlich ist aus einer vorhergehend beschriebenen zweikomponentigen Siliconzusammensetzung durch Mischen der Komponente **A** mit der Komponente **B.**

Weiterhin betrifft die Erfindung die Verwendung von zweikomponentigen Siliconzusammensetzungen, wie sie vorhergehend beschrieben sind, als Klebstoff, Dichtstoff, als Beschichtung oder als Gussmasse. Bevorzugt wird die erfindungsgemässe Zusammensetzung als Klebstoff verwendet.

Die erfindungsgemässe zweikomponentige Siliconzusammensetzung wird insbesondere verwendet in einem Verfahren des Verklebens zweier Substrate **S1** und **S2** umfassend die Schritte
a) Applikation einer zweikomponentigen Siliconzusammensetzung gemäss vorhergehender Beschreibung auf ein Substrat **S1** und/oder ein Substrat **S2**;
b) Kontaktieren der Substrate **S1** und **S2** über die applizierte Zusammensetzung innerhalb der Offenzeit der Zusammensetzung;
c) Aushärtung der Zusammensetzung durch Reaktion der Komponenten **A** und **B**;
wobei die Substrate **S1** und **S2** gleich oder verschieden voneinander sind.

Bevorzugt wird die erfindungsgemässe Zusammensetzung auch verwendet in einem Verfahren der Abdichtung oder des Beschichtens umfassend die Schritte
a') Applikation einer zweikomponentigen Siliconzusammensetzung gemäss vorhergehender Beschreibung auf ein Substrat **S1** und/oder zwischen zwei Substrate **S1** und **S2**;
b') Aushärtung der Zusammensetzung durch Reaktion der Komponenten **A** und **B**;
wobei die Substrate **S1** und **S2** gleich oder verschieden voneinander sind.

Es ist dem Fachmann selbstverständlich klar, dass unmittelbar vor oder während der Applikation der zweikomponentigen Zusammensetzung die beiden Komponenten **A** und **B** miteinander vermischt werden müssen.

Die erfindungsgemässe zweikomponentige Siliconzusammensetzung weist bevorzugt eine pastöse Konsistenz mit strukturviskosen Eigenschaften auf. Eine solche Zusammensetzung wird mit einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Als Substrate **S1** und/oder **S2** eignen sich insbesondere Substrate, welche ausgewählt sind aus der Gruppe bestehend aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polyethylen, Polyamid, Polymethyl-(meth)acrylat, Polyester, Epoxidharz, Farbe und Lack.

Die zweikomponentige Siliconzusammensetzung findet insbesondere in der industriellen Fertigung, insbesondere von Fahrzeugen und Gebrauchsgegenständen des täglichen Gebrauchs, sowie im Bauwesen, insbesondere im Tief- und Hochbau, Anwendung.

Bevorzugt wird die zweikomponentige Siliconzusammensetzung im Fensterbau und im Fassadenbau verwendet, insbesondere im Fassadenbau.

Weiterhin betrifft die Erfindung einen Artikel, welcher eine zumindest teilweise gehärtete Siliconzusammensetzung gemäss vorhergehender Beschreibung aufweist, wobei es sich bei diesem Artikel insbesondere um ein Bauwerk, ein Industriegut oder ein Transportmittel, insbesondere ein Gebäude, oder ein Teil davon handelt.

Eine beispielhafte Aufzählung derartiger Artikel sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Spiegel, Scheiben, Wannen, Weisswaren, Haushaltsapparate, Geschirrspüler, Waschmaschinen, Backofen, Schienwerfer, Nebelleuchter oder Solarpanels. Weiterhin betrifft die vorliegende Erfindung ein Verfahren zur Einstellung der Topfzeit bei gleichbleibenden mechanischen Eigenschaften nach Aushärtung von einer zweikomponentigen Siliconzusammensetzung wie vorgängig beschreiben, dadurch gekennzeichnet, dass das Mischverhältnis von Komponente **A** zu Komponente **B** bezüglich Gewicht im Bereich von Komponente **A** zu Komponente **B** von 1:1 bis 25:1, insbesondere von 5:1 bis 20:1, bevorzugt von 7:1 bis 16:1 beliebig ausgewählt wird.

Mit Hilfe dieses Verfahrens ist es möglich, die Topfzeit einer erfindungsgemässen zweikomponentigen Siliconzusammensetzung innerhalb breiter Grenzen allein durch das Mischverhältnis der beiden Komponenten **A** und **B** einzustellen. Nach Ende der eingestellten Topfzeit härtet die Zusammensetzung aussergewöhnlich rasch und sehr gleichmässig aus. Unabhängig vom gewählten Mischverhältnis sind die Endeigenschaften, insbesondere Mechanik, der ausgehärteten Zusammensetzung weitgehend gleich. Dies ist äusserst vorteilhaft und erlaubt es einem Anwender, eine flexible, aber sehr genau kontrollierbare Topfzeit einzustellen und zu variieren, ohne die Komponenten **A** und **B** der Zusammensetzung auswechseln zu müssen und allein durch das Einstellen des Mischverhältnisses, z.B. durch veränderte Förderleistung in einer Pumpe.

Somit kann eine Optimierung der Taktzeiten auch bei variierenden Prozessbedingungen eingehalten werden, ohne das Siliconmaterial wechseln zu müssen.

Die erfindungsgemässe Zusammensetzung härtet nach Ende der Topfzeit aussergewöhnlich rasch aus. Dabei ist in bevorzugten Ausführungsformen der erfindungsgmässen Siliconzusammensetzung das Verhältnis von Topfzeit zu Klebefreiheit (Zeit, bis die Oberfläche der applizierten Siliconzusammensetzung durch weit fortgeschrittene Aushärtung klebefrei geworden ist) < 2.5, insbesondere zwischen 1.1 und 2.3, bevorzugt zwischen 1.2 und 2.1. Dies ermöglicht eine sehr effiziente Prozessführung, da die Zusammensetzung nach Applikation extrem rasch aushärtet und das Substrat, auf dem die Zusammensetzung appliziert worden ist, sofort weiterverarbeitet oder transportiert werden kann.

Zweikomponentige Siliconzusammensetzungen des Standes der Technik weisen dagegen üblicherweise entweder eine sehr lange Topfzeit und gleichzeitig eine sehr lange Aushärtezeit auf, oder aber eine sehr rasche Aushärtung und dafür eine extrem kurze, anwenderunfreundliche Topfzeit. Die vorliegende Erfindung erlaubt es, je nach Bedürfnis lange oder kurze Topfzeiten einzustellen; sie erlauben aber in jedem Fall eine sehr rasche Aushärtung nach der Applikation.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung der Siliconzusammensetzungen

Es wurden die folgenden Zusammensetzungen hergestellt:
Als Komponenten A und B wurden die in den Tabellen 2 bis 5 aufgeführten Bestandteile in den angegebenen Gewichtsprozenten in einem Dissolver bei Raumtemperatur unter Inertatmosphäre miteinander vermischt und eingerührt, bis eine makroskopisch homogene Paste erhalten wurde.

Die hergestellten Komponenten **A** und **B** wurden in getrennten Behältern luftdicht verschlossen. Bei der Applikation wurden die Komponenten **A** und **B** im benötigten Gewichtsverhältnis mittels Speedmixer (Fa. Hauschild & Co. KG, Deutschland) vermischt.

### Beschreibung der Prüfmethoden

Die **Topfzeit** (auch Offenzeit) der Zusammensetzung wurde dadurch gemessen, dass die zuvor in verschlossenen Kartusche während 24 Stunden bei 23°C konditionierten Komponenten **A** und **B** in einem Gewichtsverhältnis von wie in den Tabellen 6 bis 9 angegeben (A : B = 13 : 1 oder A : B = 3 : 1) über einen Taumelmischer miteinander vermischt wurden. Es wurde anschliessend ein Holzspatel in die Masse eingebracht. Im Minutentakt wurde mit Hilfe des Spatels bestimmt, ob die gemischte Masse weiterhin pastösen Charakter aufweist. Sobald die Masse teilweise elastisches Verhalten zeigt, gilt die Topfzeit als erreicht. Es wurden auch Messungen mit künstlich gealterten Zusammensetzungen gemacht. Diese wurden vor dem oben genannten Prüfprogramm erst während 7 Tagen in verschlossenen Behältern bei 70 °C temperiert, wobei die jeweiligen Komponenten **A** und Komponenten **B** getrennt voneinander verschlossen temperiert wurden.

Die Methode zur Bestimmung der Bruchdehnung sowie der **Zugfestigkeit** sowie die Herstellung der dazu benötigten Probekörper ist beschrieben in ISO 527. Gemessen wurde bei 23°C und 50% relativer Luftfeuchtigkeit an einem Prüfkörper Typ 1B (ISO 527-2) und mit einer Zuggeschwindigkeit von 200 mm/min.

### Herstellung Vernetzer V2b

N-(2-Aminoethyl)-3-aminopropyltrimethoxysilan (Geniosil^{®} GF 91, Wacker) wurde mit einer äquimolaren Menge 3-Glycidoxypropyltrimethoxysilan (Geniosil^{®} GF 80, Wacker) in einem Glasgefäss unter Stickstoffatmosphäre vermischt. Das Gefäss wurde verschlossen und während 7 Tagen bei 23 °C belassen. Die resultierende Mischung, die frei von detektierbaren Epoxygruppen war, wurde ohne Aufbereitung als Organosilan **V2b** eingesetzt.

### Ursprung oder Herstellung der Katalysatoren K1 bis K8

**K1:** Fomrez^{®} UL-32 (Galata Chemicals)
**K2:** TIB KAT^{®} 318 (TIB Chemicals)
**K3:** Fomrez^{®} UL-22 (Galata Chemicals)
**K4:** Fomrez^{®} UL-21 (Galata Chemicals)
**K5:** 0.012 mol Dioctylzinndiacetat (TIB KAT^{®} 229, TIB Chemicals) wurden unter Stickstoffatmosphäre während 24 h bei 23°C mit 0.025 mol 3-Mercaptopropylmethyldimethoxysilan (Gelest) in einem verschlossenen Glasgefäss gerührt.
**K6:** 0.012 mol Dioctylzinndiacetat (TIB KAT^{®} 229, TIB Chemicals) wurden unter Stickstoffatmosphäre während 24 h bei 23°C mit 0.025 mol 3-Mercaptopropyltrimethoxysilan (Gelest) in einem verschlossenen Glasgefäss gerührt.
**K7:** 0.012 mol Dioctylzinndiacetat (TIB KAT^{®} 229, TIB Chemicals) wurden unter Stickstoffatmosphäre während 24 h bei 23°C mit 0.025 mol Octadecylmercaptan (Aldrich) in einem verschlossenen Glasgefäss gerührt.
**K8:** 0.012 mol Butylzinntriacetat (TIB KAT^{®} 220, TIB Chemicals) wurden unter Stickstoffatmosphäre während 24 h bei 23°C mit 0.037 mol Dodecylmercaptan (Aldrich) in einem verschlossenen Glasgefäss gerührt.

**Tabelle 1: Verwendete Katalysatoren K1 bis K8. Die Spalten beschreiben die Liganden L¹ und L² nach Formel (V). Alle Katalysatoren sind vierfach koordinierte Zinnkatalysatoren.**

| **Katalysator** | *L¹* | *L¹* | *L²* | *L²* |
|---|---|---|---|---|
| **K1** | 1-Dodecanthiolat | 1-Dodecanthiolat | Octyl | Octyl |
| **K2** | Neodecanoat | Neodecanoat | Octyl | Octyl |
| **K3** | 1-Dodecanthiolat | 1-Dodecanthiolat | Methyl | Methyl |
| **K4 ^{a}** | 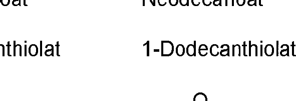 | | Octyl | Octyl |
| **K5** | 3-Mercaptopropyl-methyldimethoxysilan | 3-Mercaptopropyl-methyldimethoxysilan | Octyl | Octyl |
| **K6** | 3-Mercaptopropyltrimethoxysilan | 3-Mercaptopropyltrimethoxysilan | Octyl | Octyl |
| **K7** | 1-Octadecanthiolat | 1-Octadecanthiolat | Octyl | Octyl |
| **K8** ^{b} | 1-Dodecanthiolat | 1-Dodecanthiolat | 1-Dodecanthiolat | Butyl |

| | | | | |
|---|---|---|---|---|
| ^{a} Ligand L¹ und L² liegen in Form eines bidentaten Dimercaptans vor. ^{b} Einer der Liganden L² ist identisch mit beiden Liganden L¹. | | | | |

**Tabelle 2: Zweikomponentige Siliconzusammensetzungen 1 bis 8. Alle Zahlen in Gew.-%, bezogen auf die jeweilige Komponente A oder B;**

| ***Zusammensetzung*** | | ***1*** | ***2 Ref*** | ***3*** | ***4*** | ***5*** | ***6*** | ***7*** | ***8 Ref*** |
|---|---|---|---|---|---|---|---|---|---|
| **A** | OH-term. PDMS ^{a} (Viskosität (23°C) 20'000 mPa s) (Polymer **P1**) | 36.7 | 36.7 | 36.7 | 36.7 | 36.7 | 36.7 | 36.7 | 36.7 |
| | OH-term. PDMS ^{a} (Viskosität (25°C) 34.5 mPa·s) (Polymer **P3**) | 0.92 | 0.92 | 0.92 | 0.92 | 0.92 | 0.92 | 0.92 | 0.92 |
| | Weichmacher **W** (Wacker^{®} AK 100) ^{b} | 11.0 | 11.0 | 11.0 | 11.0 | 11.0 | 11.0 | 11.0 | 11.0 |
| | Polypropylenglykol Dispersionsadditiv | 1.38 | 1.38 | 1.38 | 1.38 | 1.38 | 1.38 | 1.38 | 1.38 |
| | Siliconöl in Wasser Emulsion 60% H₂O) | 0.46 | 0.46 | 0.46 | 0.46 | 0.46 | 0.46 | 0.46 | 0.46 |
| | Hakuenka^{®} CCR-S (hydrophobisierte Fällungskreide) | 40.4 | 40.4 | 40.4 | 40.4 | 40.4 | 40.4 | 40.4 | 40.4 |
| | Calciplast^{®} 4M (hydrophobisierte gemahlene Kreide) | 9.14 | 9.14 | 9.14 | 9.14 | 9.14 | 9.14 | 9.14 | 9.14 |
| **B** | Weichmacher **W** (Wacker^{®} AK 20'000) ^{c} | 67.5 | 67.5 | 67.5 | 67.5 | 67.5 | 67.5 | 67.5 | 67.5 |
| | Dynasylan^{®} 1124 (Vernetzer **V2a**) | 5.26 | 5.26 | 5.26 | 5.26 | 5.26 | 5.26 | 5.26 | 5.26 |
| | Vernetzer **V2b** (s. Herstellvorschrift) | 19.53 | 19.53 | 19.53 | 19.53 | 19.53 | 19.53 | 19.53 | 19.53 |
| | Wacker^{®} Silane M1 Trimethoxy (Methyltrimethoxysilan) (Vernetzer **V3**) | 2.63 | 2.63 | 2.63 | 2.63 | 2.63 | 2.63 | 2.63 | 2.63 |
| | Aerosil^{®} R972 (hydrophobe pyrogene Kieselsäure) | 4.25 | 4.25 | 4.25 | 4.25 | 4.25 | 4.25 | 4.25 | 4.25 |
| | Katalysator **K ^{d}** | **K1** | **K2** | **K3** | **K4** | **K5** | **K6** | **K7** | **K8** |

| | | | | | | | | | |
|---|---|---|---|---|---|---|---|---|---|
| ^{a} OH-term. PDMS: OH-Gruppen terminiertes Polydimethylsiloxan; ^{b} Wacker Polymer AK 100: Trialkylsilan-terminiertes Polydimethylsiloxan mit einer Viskosität nach DIN 53018 von 100 mPa s; ^{c} Wacker Siliconöl AK 20'000: Trialkylsilan-terminiertes Polydimethylsiloxan mit einer Viskosität nach DIN 53018 von 20'000 mPa·s; ^{d} Es wurden jeweils 0.82 Gew.-% Katalysator **K**, bezogen auf die Komponente **B**, eingesetzt. | | | | | | | | | |

**Tabelle 3: Zweikomponentige Siliconzusammensetzungen 9 bis 16. Alle Zahlen in Gew.-%, bezogen auf die jeweilige Komponente A oder B;**

| ***Zusammensetzung*** | | ***9*** | ***10*** | ***11*** | ***12*** | ***13*** | ***14*** | ***15*** | ***16*** |
|---|---|---|---|---|---|---|---|---|---|
| **A** | OH-term. PDMS ^{a} (Viskosität (23°C) 20'000 mPa s) (Polymer **P1)** | 36.7 | 36.7 | 36.7 | 36.7 | 36.7 | 36.7 | 36.7 | 36.7 |
| | OH-term. PDMS ^{a} (Viskosität (25°C) 34.5 mPa·s) (Polymer **P3**) | 0.92 | 0.92 | 0.92 | 0.92 | 0.92 | 0.92 | 0.92 | 0.92 |
| | Weichmacher **W** (Wacker^{®} AK 100) ^{b} | 11.0 | 11.0 | 11.0 | 11.0 | 11.0 | 11.0 | 11.0 | 11.0 |
| | Polypropylenglykol Dispersionsadditiv | 1.38 | 1.38 | 1.38 | 1.38 | 1.38 | 1.38 | 1.38 | 1.38 |
| | Siliconöl in Wasser Emulsion 60% H₂O) | 0.46 | 0.46 | 0.46 | 0.46 | 0.46 | 0.46 | 0.46 | 0.46 |
| | Hakuenka^{®} CCR-S (hydrophobisierte Fällungskreide) | 40.4 | 40.4 | 40.4 | 40.4 | 40.4 | 40.4 | 40.4 | 40.4 |
| | Calciplast^{®} 4M (hydrophobisierte gemahlene Kreide) | 9.14 | 9.14 | 9.14 | 9.14 | 9.14 | 9.14 | 9.14 | 9.14 |
| **B** | Weichmacher **W** (Wacker^{®} AK 20'000) ^{c} | 67.5 | 67.5 | 67.5 | 67.5 | 67.5 | 67.5 | 67.5 | 67.5 |
| | Dynasylan^{®} 1124 (Vernetzer **V2a**) | 16.9 | 12.4 | 7.9 | 5.3 | 5.26 | 5.26 | 5.26 | 5.26 |
| | Vernetzer **V2b** (s. Herstellvorschrift) | 7.9 | 12.4 | 16.9 | 19.5 | 16.9 | 14.3 | 6.37 | 0 |
| | Wacker^{®} Silane M1 Trimethoxy (Methyltrimethoxysilan) (Vernetzer **V3**) | 2.63 | 2.63 | 2.63 | 2.63 | 5.27 | 7.87 | 15.8 | 22.17 |
| | Aerosil^{®} R972 (hydrophobe pyrogene Kieselsäure) | 4.25 | 4.25 | 4.25 | 4.25 | 4.25 | 4.25 | 4.25 | 4.25 |
| | Katalysator **K1** ^{d} | 0.82 | 0.82 | 0.82 | 0.82 | 0.82 | 0.82 | 0.82 | 0.82 |

| | | | | | | | | | |
|---|---|---|---|---|---|---|---|---|---|
| ^{a} OH-term. PDMS: OH-Gruppen terminiertes Polydimethylsiloxan; ^{b} Wacker Polymer AK 100: Trialkylsilan-terminiertes Polydimethylsiloxan mit einer Viskosität nach DIN 53018 von 100'000 mPa s; ^{c} Wacker Siliconöl AK 20'000: Trialkylsilan-terminiertes Polydimethylsiloxan mit einer Viskosität nach DIN 53018 von 20'000 mPa s; ^{d} Bis(dodecylthio)dioctylstannan. | | | | | | | | | |

**Tabelle 4: Zweikomponentige Siliconzusammensetzungen 17 bis 24. Alle Zahlen in Gew.-%, bezogen auf die jeweilige Komponente A oder B;**

| ***Zusammensetzung*** | | ***17*** | ***18*** | ***19*** | ***20*** | ***21*** | ***22*** | ***23*** | ***24*** |
|---|---|---|---|---|---|---|---|---|---|
| **A** | OH-term. PDMS ^{a} (Viskosität (23°C) 20'000 mPa s) (Polymer **P1)** | 36.7 | 36.7 | 36.7 | 36.7 | 36.7 | 36.7 | 36.7 | 36.7 |
| | OH-term. PDMS ^{a} (Viskosität (25°C) 34.5 mPa s) (Polymer **P3**) | 0.92 | 0.92 | 0.92 | 0.92 | 0.92 | 0.92 | 0.92 | 0.92 |
| | Weichmacher **W** (Wacker^{®} AK 100) ^{b} | 11.0 | 11.0 | 11.0 | 11.0 | 11.0 | 11.0 | 11.0 | 11.28 |
| | Polypropylenglykol Dispersionsadditiv | 1.38 | 1.38 | 1.38 | 1.38 | 1.38 | 1.38 | 1.38 | 1.38 |
| | Siliconöl in Wasser Emulsion 60% H₂O) | 0.46 | 0.46 | 0.46 | 0.46 | 0.46 | 0.46 | 0.46 | 0.18 |
| | Hakuenka^{®} CCR-S (hydrophobisierte Fällungskreide) | 40.4 | 40.4 | 40.4 | 40.4 | 40.4 | 40.4 | 40.4 | 40.4 |
| | Calciplast^{®} 4M (hydrophobisierte gemahlene Kreide) | 9.14 | 9.14 | 9.14 | 9.14 | 9.14 | 9.14 | 9.14 | 9.14 |
| B | Weichmacher **W** (Wacker^{®} AK 20'000) ^{c} | 67.5 | 67.5 | 67.5 | 67.5 | 67.5 | 67.5 | 67.5 | 67.5 |
| | Dynasylan^{®} 1124 (Vernetzer **V2a**) | 5.3 | 5.26 | 5.26 | 5.26 | 5.15 | 5.27 | 5.26 | 5.26 |
| | Vernetzer **V2b** (s. Herstellvorschrift) | 19.5 | 16.9 | 16.9 | 16.9 | 16.3 | 17.3 | 16.9 | 16.9 |
| | Methyl-trimethoxysilan (Vernetzer **V3**) | 0 | 4.9 | 1.74 | 0.87 | 5.16 | 5.27 | 0 | 5.26 |
| | Octyl-trimethoxysilan (Vernetzer **V3**) | 2.62 | 0.36 | 3.52 | 4.39 | 0 | 0 | 0 | 0 |
| | Phenyl-trimethoxysilan (Vernetzer **V3**) | 0 | 0 | 0 | 0 | 0 | 0 | 5.26 | 0 |
| | Aerosil^{®} R972 (hydrophob pyrogene Kieselsäure) | 4.26 | 4.26 | 4.26 | 4.26 | 4.26 | 4.26 | 4.26 | 4.26 |
| | Katalysator **K1** ^{d} | 0.82 | 0.82 | 0.82 | 0.82 | 1.63 | 0.40 | 0.82 | 0.82 |

| | | | | | | | | | |
|---|---|---|---|---|---|---|---|---|---|
| ^{a} OH-term. PDMS: OH-Gruppen terminiertes Polydimethylsiloxan; ^{b} Wacker Polymer AK 100: Trialkylsilan-terminiertes Polydimethylsiloxan mit einer Viskosität nach DIN 53018 von 100 mPa s; ^{c} Wacker Siliconöl AK 20'000: Trialkylsilan-terminiertes Polydimethylsiloxan mit einer Viskosität nach DIN 53018 von 20'000 mPa s; ^{d} Bis(dodecylthio)dioctylstannan. | | | | | | | | | |

**Tabelle 5: Zweikomponentige Siliconzusammensetzungen 25 und 26. Alle Zahlen in Gew.-%, bezogen auf die jeweilige Komponente A oder B;**

| ***Zusammensetzung*** | | ***25*** | ***26*** |
|---|---|---|---|
| **A** | OH-term. PDMS ^{a} (Viskosität (23°C) 20'000 mPa·s) (Polymer **P1)** | 34.2 | 34.2 |
| | Weichmacher **W** (Wacker^{®} AK 100) ^{b} | 8.5 | 8.5 |
| | Polypropylenglykol Dispersionsadditiv | 1.1 | 1.1 |
| | Siliconöl in Wasser Emulsion 60% H₂O) | 0.40 | 0.40 |
| | Hakuenka^{®} CCR-S (hydrophobisierte Fällungskreide) | 19.7 | 19.7 |
| | Calciplast^{®} 4M (hydrophobisierte gemahlene Kreide) | 35.5 | 35.5 |
| **B** | Weichmacher **W** (Wacker^{®} AK 20'000) ^{c} | 64.19 | 64.01 |
| | Methyl-trimethoxysilan (Vernetzer **V3**) | 11.7 | 11.64 |
| | Vernetzer **V2b** (s. Herstellvorschrift) | 15.12 | 15.08 |
| | Dynasylan^{®} 1189 (N-(n-Butyl)-3-aminopropyltrimethoxysilan) (Vernetzer **V3**) | 0 | 3.33 |
| | Silauest^{®} A-Link 15 (N-Ethyl-3-trimethoxysilyl-2-methylpropanamin) (Vernetzer **V3**) | 3.33 | 0 |
| | Aerosil^{®} R972 (hydrophob pyrogene Kieselsäure) | 5.3 | 5.3 |
| | Katalysator **K1** ^{d} | 0.82 | 0.82 |

| | | | |
|---|---|---|---|
| ^{a} OH-term. PDMS: OH-Gruppen terminiertes Polydimethylsiloxan; ^{b} Wacker Polymer AK 100: Trialkylsilan-terminiertes Polydimethylsiloxan mit einer Viskosität nach DIN 53018 von 100 mPa·s; ^{c} Wacker Siliconöl AK 20'000: Trialkylsilan-terminiertes Polydimethylsiloxan mit einer Viskosität nach DIN 53018 von 20'000 mPa·s; ^{d} Bis(dodecylthio)dioctylstannan | | | |

**Tabelle 6: Testdaten der Zusammensetzungen 1 bis 6 und 25 bis 26.**

| ***Zusammensetzung*** | ***1*** | ***2** Ref.* | ***3*** | ***4*** | ***5*** | ***6*** | ***25*** | ***26*** |
|---|---|---|---|---|---|---|---|---|
| Topfzeit 13:1 (w/w) [min] | 26 | 3 | 6 | >180 | 31 | 17 | 25 | 30 |
| Topfzeit 3:1 (w/w) [min] | 11 | <1 | 7 | n/a | 16 | 13 | 22 | 21 |
| Topfzeit (a)* 13:1 (w/w) [min] | 28 | n/m | 5 | n/m | 40 | 30 | n/m | n/m |
| Topfzeit (a)* 3:1 (w/w) [min] | 11.3 | n/m | 2.5 | n/m | 19 | 5.8 | n/m | n/m |

| | | | | | | | | |
|---|---|---|---|---|---|---|---|---|
| (a)* : Die Komponenten **A** und **B** dieser Proben wurden vorhergehend während 7d bei 70°C im Ofen gealtert. n/m : Daten wurden nicht gemessen. n/a : Nicht ausgehärtet. | | | | | | | | |

**Tabelle 7: Testdaten der Zusammensetzungen 7 bis 12.**

| ***Zusammensetzung*** | ***7*** | ***8** Ref*. | ***9*** | ***10*** | ***11*** | ***12*** |
|---|---|---|---|---|---|---|
| Topfzeit 13:1 (w/w) [min] | 22 | > 270 | 7 | 11 | 35 | 36 |
| Topfzeit 3:1 (w/w) [min] | 7.6 | > 270 | 4.25 | 7 | 17.5 | 11 |
| Topfzeit (a)* 13:1 (w/w) [min] | 19 | n/m | 7 | 12 | n/m | n/m |
| Topfzeit (a)* 3:1 (w/w) [min] | 4.3 | n/m | 4.25 | 7.3 | n/m | n/m |
| Zugfestigkeit 5h [MPa] | n/m | n/m | 1.66 | 1.59 | 1.12 | 1.2 |
| Zugfestigkeit 24h [MPa] | n/m | n/m | 1.65 | 1.68 | 1.47 | 1.43 |
| Zugfestigkeit 7d [MPa] | n/m | n/m | 1.59 | 1.7 | 1.67 | 1.29 |
| Zugfestigkeit (a)* 7d [MPa] | n/m | n/m | 1.52 | 1.58 | n/m | n/m |

| | | | | | | |
|---|---|---|---|---|---|---|
| (a)* : Die Komponenten **A** und **B** dieser Proben wurden vorhergehend während 7d bei 70°C im Ofen gealtert. n/m : Daten wurden nicht gemessen. | | | | | | |

**Tabelle 8: Testdaten der Zusammensetzungen 13 bis 18.**

| ***Zusammensetzung*** | ***13*** | ***14*** | ***15*** | ***16*** | ***17*** | ***18*** |
|---|---|---|---|---|---|---|
| Topfzeit 13:1 (w/w) [min] | 31 | 30 | 20 | 15.5 | 50 | 30 |
| Topfzeit 3:1 (w/w) [min] | 10 | 9.9 | 6 | 4 | 13.5 | 10 |
| Topfzeit (a)* 13:1 (w/w) [min] | 38 | n/m | n/m | n/m | n/m | 34 |
| Topfzeit (a)* 3:1 (w/w) [min] | 12 | n/m | n/m | n/m | n/m | 12 |
| Zugfestigkeit 5h [MPa] | 1.61 | 1.76 | 1.38 | 1.45 | 0.6 | n/m |
| Zugfestigkeit 24h [MPa] | 1.69 | 1.66 | 1.55 | 1.51 | 1.53 | n/m |
| Zugfestigkeit 7d [MPa] | 1.69 | 1.77 | 1.72 | 1.48 | 1.69 | 1.81 |
| Zugfestigkeit (a)* 7d [MPa] | 1.7 | 1.64 | n/m | n/m | 1.64 | 1.78 |

| | | | | | | |
|---|---|---|---|---|---|---|
| (a)* : Die Komponenten **A** und **B** dieser Proben wurden vorhergehend während 7d bei 70°C im Ofen gealtert. n/m : Daten wurden nicht gemessen. | | | | | | |

**Tabelle 9: Testdaten der Zusammensetzungen 19 bis 24.**

| ***Zusammensetzung*** | ***19*** | ***20*** | ***21*** | ***22*** | ***23*** | ***24*** |
|---|---|---|---|---|---|---|
| Topfzeit 13:1 (w/w) [min] | 52 | 50 | 16 | 40 | 12.5 | 31 |
| Topfzeit 3:1 (w/w) [min] | 9.5 | 10 | 10.3 | 9 | 6 | 9.75 |
| Topfzeit (a)* 13:1 (w/w) [min] | 51 | 51 | 21 | n/m | 15 | n/m |
| Topfzeit (a)* 3:1 (w/w) [min] | 10 | 10.5 | 8.75 | n/m | 6.3 | n/m |
| Zugfestigkeit 5h [MPa] | 0.76 | 0.5 | 1.73 | 0.85 | 1.64 | 1.64 |
| Zugfestigkeit 24h [MPa] | 1.54 | 1.69 | 1.84 | 1.56 | 1.58 | 1.65 |
| Zugfestigkeit 7d [MPa] | 1.68 | 1.87 | 1.73 | 1.65 | 1.51 | 1.68 |
| Zugfestigkeit (a)* 7d [MPa] | 1.57 | 1.68 | 1.79 | n/m | 1.5 | n/m |

| | | | | | | |
|---|---|---|---|---|---|---|
| (a)* : Die Komponenten **A** und **B** dieser Proben wurden vorhergehend während 7d bei 70°C im Ofen gealtert. n/m : Daten wurden nicht gemessen. | | | | | | |

## Patentansprüche

1. Zweikomponentige Siliconzusammensetzung, bestehend aus einer Komponente **A** umfassend
i) mindestens ein Hydroxylgruppen-terminiertes Polydiorganosiloxan **P**;
ii) bevorzugt mindestens einen Füllstoff;
iii) zwischen 0.05 und 5.0 Gew.-% emulgiertes Wasser, bezogen auf Komponente **A**;
und einer Komponente **B** umfassend
i) mindestens ein nicht kondensierbares Polyidiorganosiloxan **W** als Weichmacher;
ii) mindestens ein Organosilan **V** als Vernetzer;
iii) mindestens einen Katalysator **K** für die Vernetzung von Polydiorganosiloxanen;
**dadurch gekennzeichnet, dass**
alle Organosilane **V** vorzugsweise dieselben hydrolysierbaren Alkoxysilangruppen aufweisen, bevorzugt Methoxysilangruppen; und Katalysator **K** ein Zinnkomplex mit zwei Mercaptidliganden nach Formel (V) ist, 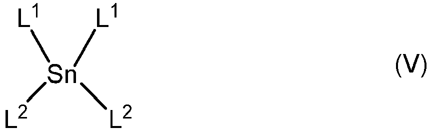
wobei Liganden L¹ unabhängig voneinander für über Schwefel koordinierte Alkylmercaptipde stehen, insbesondere C₆ bis C₁₆ Alkylmercaptide, wobei Liganden L¹ optional Methyldialkoxysilagruppen, bevorzugt Methyldimethoxysilangruppen aufweisen, und Liganden L² unabhängig voneinander für Alkylliganden stehen, insbesondere für C₆ bis C₁₄ Alkylliganden; und
Komponente **B** weniger als 5 Gew.-% Russ, bezogen auf Komponente **B,** enthält.

2. Zweikomponentige Siliconzusammensetzung gemäss Anspruch 1, **dadurch gekennzeichnet, dass** das Hydroxylgruppen-terminierte Polydiorganosiloxan **P** ein Polydiorganosiloxan **P'** der Formel (I) ist 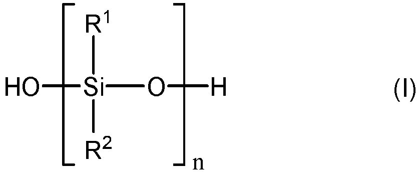 wobei
die Reste R¹ und R² unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen; und
n so gewählt ist, dass das Gewichtsmittel des Molekulargewichts M_{w} des Polydiorganosiloxans **P'** relativ zu Polystyrol 500 bis 250'000 g/mol beträgt.

3. Zweikomponentige Siliconzusammensetzung gemäss Anspruch 2, **dadurch gekennzeichnet, dass** das Hydroxylgruppen terminierte Polydiorganosiloxan **P'**
ein Polydiorganosiloxan **P1** der Formel (I) ist, wobei n so gewählt ist, dass das Gewichtsmittel des Molekulargewichts M_{w} des Polydiorganosiloxans **P1** relativ zu Polystyrol 30'000 bis 80'000 g/mol beträgt; oder
dass als Polydiorganosiloxan **P'** eine Mischung eingesetzt wird von
i') mindestens einem Hydroxylgruppen-terminierten Polydiorganosiloxan **P2** der Formel (I), wobei n so gewählt ist, dass das Gewichtsmittel des Molekulargewichts M_{w} des Polydiorganosiloxans **P2** relativ zu Polystyrol > 80'000 bis 250'000 g/mol beträgt; sowie
ii') mindestens einem Hydroxylgruppen-terminierten Polydiorganosiloxan **P3** der Formel (I), wobei n so gewählt ist, dass das Gewichtsmittel des Molekulargewichts M_{w} des Polydiorganosiloxans **P3** relativ zu Polystyrol 500 bis ≤ 30'000 g/mol, beträgt;
oder dass als Polydiorganosiloxan **P'** eine Mischung eingesetzt wird von
i") mindestens einem Hydroxylgruppen terminierten Polydiorganosiloxan **P1** der Formel (I), wobei n so gewählt ist, dass das Gewichtsmittel des Molekulargewichts M_{w} des Polydiorganosiloxans **P1** relativ zu Polystyrol 30'000 bis 80'000 g/mol, beträgt; sowie
ii") mindestens einem Hydroxylgruppen terminierten Polydiorganosiloxan **P3** der Formel (I), wobei n so gewählt ist, dass das Gewichtsmittel des Molekulargewichts M_{w} des Polydiorganosiloxans **P3** relativ zu Polystyrol 500 bis ≤ 30'000 g/mol beträgt.

4. Zweikomponentige Siliconzusammensetzung gemäss einem der Ansprüche 2 und 3, **dadurch gekennzeichnet, dass** die Reste R¹ und R² für Alkylreste mit 1 bis 5, insbesondere mit 1 bis 3, C-Atomen, bevorzugt für Methylgruppen, stehen.

5. Zweikomponentige Siliconzusammensetzung gemäss einem der vorhergehenen Ansprüche, **dadurch gekennzeichnet, dass** Organosilan **V** zwischen 0 und 50 Gew.-%, bezogen auf die Komponente **B,** mindestens eines ersten Organosilans **V1** nach Formel (I) umfasst; und 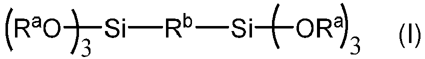
zwischen 2 und 60 Gew.-%, bezogen auf die Komponente **B,** mindestens eines zweiten Organosilans **V2** nach Formel (II) umfasst; 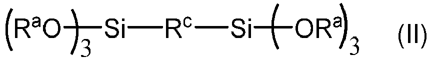
und bis zu 25 Gew.-%, bezogen auf die Komponente **B,** weitere Organosilane **V3** mit hydrolysierbaren Alkxoysilangruppen Si-OR^{a}, welche nicht unter die Formeln (I) und (II) fallen, umfasst;
wobei R^{a} für ein Wasserstoffatom oder eine Ethylgruppe oder eine Methylgruppe steht, insbesondere eine Methylgruppe;
R^{b} für einen divalenten, linearen oder verzweigten Alkylrest oder Alkenylrest mit 2 bis 20 Kohlenstoffatomen steht, und
R^{c} für einen divalenten, linearen oder verzweigten Alkylrest mit 2 bis 20 Kohlenstoffatomen steht, der mindestens eine sekundäre Aminogruppe enthält;
mit der Massgabe, dass die Zusammensetzung weniger als 10 mol-%, bezogen auf die Menge an Organosilan **V2**, an Organosilanen mit Epoxygruppen enthält.

6. Zweikomponentige Siliconzusammensetzung gemäss Anspruch 5, **dadurch gekennzeichnet, dass** Organosilan **V3** mindestens ein Silan der Formel (III) umfasst, 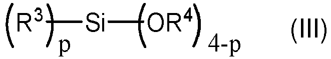
wobei der Rest R³ unabhängig voneinander für einen linearen oder verzweigten, einwertigen Kohlenwasserstoffrest mit 1 bis 12 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist; der Rest R⁴ für einen Rest R^{a} steht; und
p für einen Wert von 0 bis 4 steht, mit der Massgabe, dass falls p für einen Wert von 3 oder 4 steht, mindestens p-2 Reste R³ jeweils mindestens eine mit den Hydroxylgruppen des Polydiorganosiloxans **P** reaktive, insbesondere kondensierbare, Gruppe aufweisen.

7. Zweikomponentige Siliconzusammensetzung gemäss einem der Ansprüche 5 oder 6, **dadurch gekennzeichnet, dass** das Organosilan **V2** mindestens ein Organosilan nach Formel (IIa) umfasst, 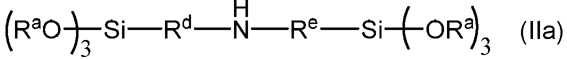
wobei R^{d} für einen divalenten, linearen oder verzweigten Alkylrest mit 2 bis 10 Kohlenstoffatomen steht, der optional eine Hydroxylgruppe sowie einen Ethersauerstoff enthält, und
R^{e} für einen divalenten, linearen oder verzweigten Alkylrest mit 2 bis 10 Kohlenstoffatomen steht, der optional eine sekundäre Aminogruppe enthält.

8. Zweikomponentige Siliconzusammensetzung gemäss Anspruch 7, **dadurch gekennzeichnet, dass** das Organosilan **V2** entweder
- ein Organosilan **V2a** darstellt, bei dem die Reste R^{d} und R^{e} in Formel (IIa) beide für einen divalenten, linearen oder verzweigten Alkylrest mit 2 bis 10 Kohlenstoffatomen stehen, insbesondere einen Propylrest; oder
- ein Organosilan **V2b** darstellt, bei dem Rest R^{e} in Formel (IIa) für einen divalenten, linearen oder verzweigten Alkylrest mit 2 bis 10 Kohlenstoffatomen steht, der optional eine sekundäre Aminogruppe enthält, und Rest R^{d} einen divalenten, linearen oder verzweigten Alkylrest mit 2 bis 10 Kohlenstoffatomen, insbesondere einen Propylrest, enthält sowie zusätzlich eines der beiden Strukturelemente enthält, die in Formel (IIb) dargestellt sind; 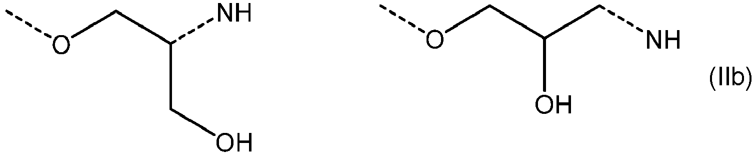
- oder eine Mischung aus einem Organosilan **V2a** und einem Organosilan **V2b** darstellen, wobei die genannten Organosilane **V2a** und **V2b** bevorzugt in einem Gewichtsverhältnis von zwischen 1:2 und 2:1 in der Komponente B enthalten sind.

9. Zweikomponentige Siliconzusammensetzung gemäss Anspruch 8, **dadurch gekennzeichnet, dass** Organosilan **V2** ein Organosilan **V2a** umfasst, wobei Organosilan **V2a** in einer Menge von zwischen 5 Gew.-% und 20 Gew.-% bezogen auf Komponente **B** enthalten ist, und Organosilan **V2** ein Organosilan **V2b** umfasst, wobei Organosilan **V2b** in einer Menge von zwischen 5 Gew.-% und 20 Gew.-% bezogen auf Komponente **B** enthalten ist, und dass mindestens ein Organosilan **V3** mit einer Menge von zwischen 2.5 Gew.-% und 20 Gew.-% bezogen auf Komponente **B** enthalten ist, und dass der Katalysator **K** in einer Menge von zwischen 0.1 Gew.-% und 1.5 Gew.-%, bezogen auf Komponente **B,** in der Komponente **B** enthalten ist.

10. Zweikomponentige Siliconzusammensetzung gemäss einem der Ansprüche 7 bis 9, **dadurch gekennzeichnet, dass** Organosilan **V2b** einen Rest R^{e} einen divalenten C₅ Alkylrest darstellt, welcher eine sekundäre Aminogruppe in der Kohlenstoffkette aufweist und Rest R^{d} einen linearen, divalenten C₆ Alkylrest darstellt, welcher einen Ethersauerstoff in der Kohlenstoffkette aufweist sowie eine Hydroxylgruppe aufweist.

11. Zweikomponentige Siliconzusammensetzung gemäss einem der vorhergehenden Ansprüche, **dadurch gekennzeichnet, dass** im Katalysator **K** der Formel (V) beide Liganden L¹ für Dodecylmercaptid stehen und beide Liganden L² für Octyl stehen.

12. Zweikomponentige Siliconzusammensetzung gemäss einem der vorhergehenden Ansprüche, **dadurch gekennzeichnet, dass** das Gewichtsverhältnis von Komponente **A** zu Komponente **B** ≥ 1:1, insbesondere von 5:1 bis 20:1, bevorzugt von 7:1 bis 16:1, beträgt.

13. Verwendung einer zweikomponentigen Siliconzusammensetzung gemäss einem der Ansprüche 1 bis 12 als Klebstoff, Dichtstoff, Beschichtung oder als Gussmasse.

14. Verwendung gemäss Anspruch 13, **dadurch gekennzeichnet, dass** die zweikomponentige Siliconzusammensetzung im Fensterbau oder Fassadenbau verwendet wird.

15. Gehärtete Siliconzusammensetzung, **dadurch gekennzeichnet, dass** sie erhältlich ist aus einer zweikomponentigen Siliconzusammensetzung gemäss einem der Ansprüche 1 bis 12 durch Mischen der Komponente **A** mit der Komponente **B.**

## Claims

1. Two-component silicone composition consisting of a component **A** comprising
i) at least one hydroxyl-terminated polydiorganosiloxane **P;**
ii) preferably at least one filler;
iii) between 0.05% and 5.0% by weight of emulsified water, based on component **A;**
and a component **B** comprising
i) at least one noncondensable polydiorganosiloxane **W** as plasticizer;
ii) at least one organosilane **V** as crosslinker;
iii) at least one catalyst **K** for the crosslinking of polydiorganosiloxanes;
**characterized in that**
all organosilanes **V** preferably have the same hydrolyzable alkoxysilane groups, preferably methoxysilane groups; and
catalyst **K** is a tin complex of formula (V) that has two mercaptide ligands, 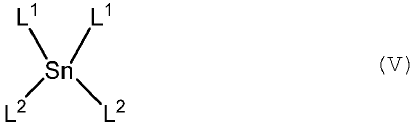
where ligands L¹ are each independently alkyl mercaptides coordinated via sulfur, especially C₆ to C₁₆ alkyl mercaptides, where ligands L¹ optionally have methyldialkoxysilane groups, preferably methyldimethoxysilane groups, and ligands L² are each independently alkyl ligands, especially C₆ to C₁₄ alkyl ligands; and
component **B** contains less than 5% by weight of carbon black, based on component **B.**

2. Two-component silicone composition according to Claim 1, **characterized in that** the hydroxyl-terminated polydiorganosiloxane **P** is a polydiorganosiloxane **P'** of the formula (I) 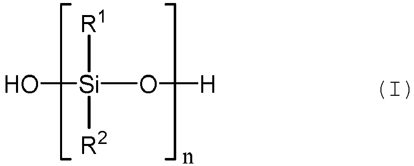 where
the radicals R¹ and R² are each independently linear or branched, monovalent hydrocarbyl radicals that have 1 to 12 carbon atoms and optionally include one or more heteroatoms, and optionally one or more C-C multiple bonds and/or optionally cycloaliphatic and/or aromatic components; and
n is chosen such that the weight-average molecular weight M_{w} of the polydiorganosiloxane **P'** relative to polystyrene is 500 to 250 000 g/mol.

3. Two-component silicone composition according to Claim 2, **characterized in that** the hydroxyl-terminated polydiorganosiloxane **P'**
is a polydiorganosiloxane **P1** of the formula (I), where n is chosen such that the weight-average molecular weight M_{w} of the polydiorganosiloxane **P1** relative to polystyrene is 30 000 to 80 000 g/mol; or
**in that** the polydiorganosiloxane **P'** used is a mixture of
i') at least one hydroxyl-terminated polydiorganosiloxane **P2** of the formula (I), where n is chosen such that the weight-average molecular weight M_{w} of the polydiorganosiloxane **P2** relative to polystyrene is > 80 000 to 250 000 g/mol; and
ii') at least one hydroxyl-terminated polydiorganosiloxane **P3** of the formula (I), where n is chosen such that the weight-average molecular weight M_{w} of the polydiorganosiloxane **P3** relative to polystyrene is 500 to ≤ 30 000 g/mol;
or **in that** the polydiorganosiloxane **P'** used is a mixture of
i'') at least one hydroxyl-terminated polydiorganosiloxane **P1** of the formula (I), where n is chosen such that the weight-average molecular weight M_{w} of the polydiorganosiloxane **P1** relative to polystyrene is 30 000 to 80 000 g/mol; and
ii") at least one hydroxyl-terminated polydiorganosiloxane **P3** of the formula (I), where n is chosen such that the weight-average molecular weight M_{w} of the polydiorganosiloxane **P3** relative to polystyrene is 500 to ≤ 30 000 g/mol.

4. Two-component silicone composition according to either of Claims 2 and 3, **characterized in that** the radicals R¹ and R² are alkyl radicals having 1 to 5, especially having 1 to 3, carbon atoms, preferably methyl groups.

5. Two-component silicone composition according to any of the preceding claims, **characterized in that** organosilane **V** comprises between 0% and 50% by weight, based on component **B,** of at least one first organosilane **V1** of formula (I); and 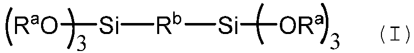
comprises between 2% and 60% by weight, based on component **B,** of at least one second organosilane **V2** of formula (II); 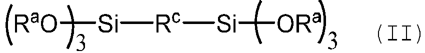
and comprises up to 25% by weight, based on component **B,** of further organosilanes **V3** having hydrolyzable alkoxysilane groups Si-OR^{a} that are not covered by the formulas (I) and (II);
where R^{a} is a hydrogen atom or an ethyl group or a methyl group, especially a methyl group;
R^{b} is a divalent linear or branched alkyl radical or alkenyl radical having 2 to 20 carbon atoms, and
R^{c} is a divalent linear or branched alkyl radical that has 2 to 20 carbon atoms and contains at least one secondary amino group;
with the proviso that the composition contains less than 10 mol%, based on the amount of organosilane **V2,** of organosilanes having epoxy groups.

6. Two-component silicone composition according to Claim 5, **characterized in that** organosilane **V3** comprises at least one silane of the formula (III), 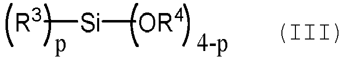
where the radical R³ is each independently a linear or branched, monovalent hydrocarbyl radical that has 1 to 12 carbon atoms and optionally includes one or more heteroatoms, and optionally one or more C-C multiple bonds and/or optionally cycloaliphatic and/or aromatic components;
the radical R⁴ is a radical R^{a}; and
p has a value of 0 to 4, with the proviso that, if p has a value of 3 or 4, at least p-2 radicals R³ each have at least one group reactive, especially condensable, with the hydroxyl groups of the polydiorganosiloxane **P.**

7. Two-component silicone composition according to either of Claims 5 or 6, **characterized in that** the organosilane **V2** comprises at least one organosilane of formula (IIa), 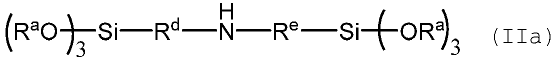 where R^{d} is a divalent linear or branched alkyl radical that has 2 to 10 carbon atoms and optionally contains a hydroxyl group and an ether oxygen, and R^{e} is a divalent linear or branched alkyl radical that has 2 to 10 carbon atoms and optionally contains a secondary amino group.

8. Two-component silicone composition according to Claim 7, **characterized in that** the organosilane **V2** is either
- an organosilane **V2a** in which the radicals R^{d} and R^{e} in formula (IIa) are both a divalent linear or branched alkyl radical having 2 to 10 carbon atoms, especially a propyl radical; or
- an organosilane **V2b** in which radical R^{e} in formula (IIa) is a divalent linear or branched alkyl radical having 2 to 10 carbon atoms that optionally contains a secondary amino group, and radical R^{d} contains a divalent linear or branched alkyl radical having 2 to 10 carbon atoms, especially a propyl radical, and additionally contains one of the two structural elements shown in formula (IIb); 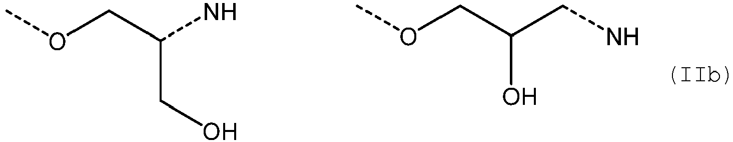
- or are a mixture of an organosilane **V2a** and an organosilane **V2b,** where the organosilanes **V2a** and **V2b** mentioned are preferably present in component B in a weight ratio of between 1:2 and 2:1.

9. Two-component silicone composition according to Claim 8, **characterized in that** organosilane **V2** comprises an organosilane **V2a,** organosilane **V2a** being present in an amount of between 5% by weight and 20% by weight based on component **B,** and organosilane **V2** comprises an organosilane **V2b,** organosilane **V2b** being present in an amount of between 5% by weight and 20% by weight based on component **B,** and **in that** at least one organosilane **V3** is present in an amount of between 2.5% by weight and 20% by weight based on component **B,** and **in that** the catalyst **K** is present in component **B** in an amount of between 0.1% by weight and 1.5% by weight, based on component **B.**

10. Two-component silicone composition according to any of Claims 7 to 9, **characterized in that** in organosilane **V2b** a radical R^{e} is a divalent C₅ alkyl radical that has a secondary amino group in the carbon chain and radical R^{d} is a linear divalent C₆ alkyl radical that has an ether oxygen in the carbon chain and also has a hydroxyl group.

11. Two-component silicone composition according to any of the preceding claims, **characterized in that**, in the catalyst **K** of the formula (V), both ligands L¹ are dodecyl mercaptide and both ligands L² are octyl.

12. Two-component silicone composition according to any of the preceding claims, **characterized in that** the weight ratio of component **A** to component **B** is ≥ 1:1, especially from 5:1 to 20:1, preferably from 7:1 to 16:1.

13. Use of a two-component silicone composition according to any of Claims 1 to 12 as adhesive, sealant, coating or as casting compound.

14. Use according to Claim 13, **characterized in that** the two-component silicone composition is used in window construction or facade construction.

15. Cured silicone composition, **characterized in that** it is obtainable from a two-component silicone composition according to any of Claims 1 to 12 by mixing component **A** with component **B.**

## Revendications

1. Composition de silicone à deux composants, constituée par un composant A comprenant
i) au moins un polydiorganosiloxane P terminé par des groupes hydroxyle ;
ii) de préférence au moins une charge ;
iii) entre 0,05 et 5,0% en poids d'eau émulsionnée, par rapport au composant A ;
et un composant B comprenant
i) au moins un polydiorganosiloxane W non condensable en tant que plastifiant ;
ii) au moins un organosilane V en tant qu'agent de réticulation ;
iii) au moins un catalyseur K pour la réticulation de polydiorganosiloxanes ;
**caractérisée en ce que**
tous les organosilanes V présentent de préférence les mêmes groupes alcoxysilane hydrolysables, de préférence des groupes méthoxysilane ;
et le catalyseur K est un complexe d'étain présentant deux ligands mercapture selon la formule (V), 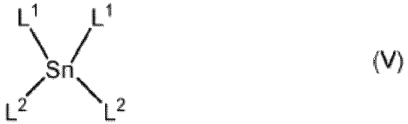
les ligands L¹ représentant, indépendamment l'un de l'autre, mercapture d'alkyle coordiné par l'intermédiaire du soufre, en particulier mercapture de C₆-C₁₆-alkyle, les ligands L¹ présentant éventuellement des groupes méthyldialcoxysilane, de préférence des groupes méthyldiméthoxysilane, et les ligands L² représentant, indépendamment les uns des autres, des ligands alkyle, en particulier des ligands C₆-C₁₄-alkyle ; et
le composant B contient moins de 5% en poids de suie, par rapport au composant B.

2. Composition de silicone à deux composants selon la revendication 1, **caractérisée en ce que** le polydiorganosiloxane P terminé par des groupes hydroxyle est un polydiorganosilane P' de formule (I) 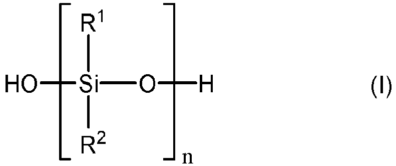
les radicaux R¹ et R² représentant, indépendamment les uns des autres, des radicaux hydrocarbonés linéaires ou ramifiés, monovalents, comprenant 1 à 12 atomes de carbone, qui présentent le cas échéant un ou plusieurs hétéroatomes et le cas échéant une ou plusieurs liaisons multiples C-C et/ou le cas échéant des parties cycloaliphatiques et/ou aromatiques ;
n étant choisi de manière telle que la moyenne en poids du poids moléculaire M_{w} du polydiorganosiloxane P' par rapport au polystyrène est de 500 à 250.000 g/mole.

3. Composition de silicone à deux composants selon la revendication 2, **caractérisée**
**en ce que** le polydiorganosiloxane P' terminé par des groupes hydroxyle est un polydiorganosiloxane P1 de formule (I), n étant choisi de manière telle que la moyenne en poids du poids moléculaire M_{w} du polydiorganosiloxane P1 par rapport au polystyrène est de 30.000 à 80.000 g/mole ;
ou en ce qu'on utilise, comme polydiorganosiloxane P', un mélange de
i') au moins un polydiorganosiloxane P2 terminé par des groupes hydroxyle de formule (I), n étant choisi de manière telle que la moyenne en poids du poids moléculaire M_{w} du polydiorganosiloxane P2 par rapport au polystyrène est > 80.000 à 250.000 g/mole ; ainsi que de
ii') au moins un polydiorganosiloxane P3 terminé par des groupes hydroxyle de formule (I), n étant choisi de manière telle que la moyenne en poids du poids moléculaire M_{w} du polydiorganosiloxane P3 par rapport au polystyrène est de 500 à ≤ 30.000 g/mole ;
ou en ce qu'on utilise, comme polydiorganosiloxane P', un mélange de
i") au moins un polydiorganosiloxane P1 terminé par des groupes hydroxyle de formule (I), n étant choisi de manière telle que la moyenne en poids du poids moléculaire M_{w} du polydiorganosiloxane P1 par rapport au polystyrène est de 30.000 à 80.000 g/mole ; ainsi que de
ii") au moins un polydiorganosiloxane P3 terminé par des groupes hydroxyle de formule (I), n étant choisi de manière telle que la moyenne en poids du poids moléculaire M_{w} du polydiorganosiloxane P3 par rapport au polystyrène est de 500 à ≤ 30.000 g/mole.

4. Composition de silicone à deux composants selon l'une des revendications 2 et 3, **caractérisée en ce que** les radicaux R¹ et R² représentent des radicaux alkyle comprenant 1 à 5, en particulier 1 à 3, atomes de carbone, de préférence des groupes méthyle.

5. Composition de silicone à deux composants selon l'une des revendications précédentes, **caractérisée en ce que** l'organosilane V comprend entre 0 et 50% en poids, par rapport au composant B, d'au moins un premier organosilane V1 selon la forme (I) ; 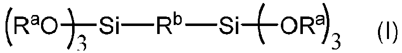
et comprend entre 2 et 60% en poids, par rapport au composant B, d'au moins un deuxième organosilane V2 selon la forme (I) ; 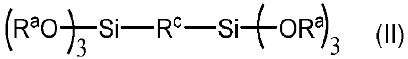
et comprend jusqu'à 25% en poids, par rapport au composant B, d'autres organosilanes V3 présentant des groupes alcoxysilane hydrolysables Si-OR^{a}, qui ne relèvent pas des formules (I) et (II) ;
R^{a} représentant un atome d'hydrogène ou un groupe éthyle ou un groupe méthyle, en particulier un groupe méthyle ; R^{b} représentant un radical alkyle ou alcényle bivalent, linéaire ou ramifié, comprenant 2 à 20 atomes de carbone et
R^{c} représentant un radical alkyle bivalent, linéaire ou ramifié, comprenant 2 à 20 atomes de carbone, qui contient au moins un groupe amino secondaire ;
étant entendu que la composition contient moins de 10% en mole, par rapport à la quantité d'organosilane V2, d'organosilanes présentant des groupes époxy.

6. Composition de silicone à deux composants selon la revendication 5, **caractérisée en ce que** l'organosilane V3 comprend au moins un silane de formule (III), 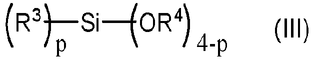
le radical R³ représentant, indépendamment, un radical hydrocarboné linéaire ou ramifié, monovalent, comprenant 1 à 12 atomes de carbone, qui présente le cas échéant un ou plusieurs hétéroatomes et le cas échéant une ou plusieurs liaisons multiples C-C et/ou le cas échéant des parties cycloaliphatiques et/ou aromatiques ;
le radical R⁴ représentant un radical R^{a} ; et
p présentant une valeur de 0 à 4, à condition que, si p présente une valeur de 3 ou 4, au moins p-2 radicaux R³ présentent à chaque fois au moins un groupe réactif, en particulier condensable, avec les groupes hydroxyle du polydiorganosiloxane P.

7. Composition de silicone à deux composants selon l'une des revendications 5 ou 6, **caractérisée en ce que** l'organosilane V2 comprend au moins un organosilane selon la formule (IIa), 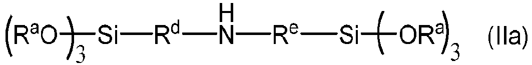
R^{d} représentant un radical alkyle bivalent, linéaire ou ramifié, comprenant 2 à 10 atomes de carbone, qui contient éventuellement un groupe hydroxyle ainsi qu'un oxygène à fonction éther et
R^{e} représentant un radical alkyle bivalent, linéaire ou ramifié, comprenant 2 à 10 atomes de carbone, qui contient éventuellement un groupe amino secondaire.

8. Composition de silicone à deux composants selon la revendication 7, **caractérisée en ce que** l'organosilane V2 représente soit
- un organosilane V2a dans lequel les radicaux R^{d} et R^{e} dans la formule (IIa) représentent tous les deux un radical alkyle bivalent, linéaire ou ramifié, comprenant 2 à 10 atomes de carbone, en particulier un radical propyle ; soit
- un organosilane V2b dans lequel le radical R^{e} dans la formule (IIa) représente un radical alkyle bivalent, linéaire ou ramifié, comprenant 2 à 10 atomes de carbone, qui contient éventuellement un groupe amino secondaire et le radical R^{d} représente un radical alkyle bivalent, linéaire ou ramifié, comprenant 2 à 10 atomes de carbone, en particulier un radical propyle, et qui contient éventuellement en plus l'un des deux motifs structuraux représentés dans la formule (IIb) ; 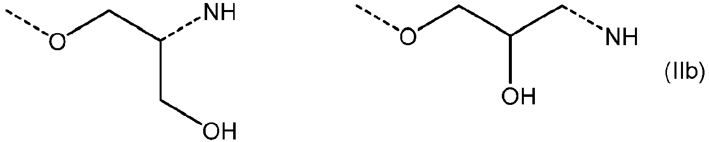
- ou un mélange d'un organosilane V2a et d'un organosilane V2b, les organosilanes V2a et V2b mentionnés étant de préférence contenus dans un rapport en poids entre 1:2 et 2:1 dans le composant B.

9. Composition de silicone à deux composants selon la revendication 8, **caractérisée en ce que** l'organosilane V2 comprend un organosilane V2a, l'organosilane V2a étant contenu en une quantité entre 5% en poids et 20% en poids, par rapport au composant B et l'organosilane V2 comprend un organosilane V2b, l'organosilane V2b étant contenu en une quantité entre 5% en poids et 20% en poids, par rapport au composant B et **en ce qu'**au moins un organosilane V3 est contenu en une quantité entre 2,5% en poids et 20% en poids, par rapport au composant B et **en ce que** le catalyseur K est contenu en une quantité entre 0,1% en poids et 1,5% en poids, par rapport au composant B, dans le composant B.

10. Composition de silicone à deux composants selon l'une des revendications 7 à 9, **caractérisée en ce que** dans l'organosilane V2b, le radical R^{e} représente un radical C₅-alkyle bivalent, qui présente un groupe amino secondaire dans la chaîne carbonée, et le radical R^{d} représente un radical C₆-alkyle linéaire, bivalent, qui présente un oxygène à fonction éther dans la chaîne carbonée ainsi qu'un groupe hydroxyle.

11. Composition de silicone à deux composants selon l'une des revendications précédentes, **caractérisée en ce que** dans le catalyseur K de formule (V), les deux ligands L¹ représentent mercapture de dodécyle et les deux ligands L² représentent octyle.

12. Composition de silicone à deux composants selon l'une des revendications précédentes, **caractérisée en ce que** le rapport pondéral du composant A au composant B est ≥ 1:1, en particulier de 5:1 à 20:1, de préférence de 7:1 à 16:1.

13. Utilisation d'une composition de silicone à deux composants selon l'une des revendications 1 à 12 comme adhésif, masse d'étanchéité, revêtement ou masse de moulage.

14. Utilisation selon la revendication 13, **caractérisée en ce que** la composition de silicone à deux composants est utilisée dans la construction de fenêtres ou de façades.

15. Composition de silicone durcie, **caractérisée en ce qu'**elle peut être obtenue à partir d'une composition de silicone à deux composants selon l'une des revendications 1 à 12 par mélange du composant A avec le composant B.
